# EUROPEAN PATENT SPECIFICATION

(11) **EP 2 973 781 B1**
(45) Date of publication and mention of the grant of the patent: **26.08.2020**
(21) Application number: 14769150.5
(22) Date of filing: 05.03.2014
(51) Int. Cl.: H01M 2/16, H01M 10/06, D04H 1/4382, D04H 1/4218, H01M 2/14

(54) **THREE-REGION BATTERY SEPARATOR**
BATTERIESEPARATOR MIT DREI BEREICHEN
SEPARATEUR DE BATTERIE À TROIS RÉGIONS

(30) Priority: 15.03.2013 US 201313834597
(43) Date of publication of application: 20.01.2016
(73) Proprietor: Hollingsworth & Vose Company, East Walpole, MA 02032 (US)
(72) Inventor: CLEMENT, Nicolas, Littleton, MA 01460 (US); ASHIRGADE, Akshay, Northborough, MA 01532 (US)
(74) Representative: Hoffmann Eitle
(86) International application number: PCT/US2014/020484
(87) International publication number: WO 2014/149703

(56) References cited:
- EP-A1- 2 352 187
- EP-A1- 2 571 079
- EP-A2- 1 444 742
- WO-A1-2011/142096
- US-A- 4 529 677
- US-A1- 2002 142 226
- US-A1- 2003 008 214
- US-A1- 2003 008 214
- US-A1- 2012 183 862

## Description

### TECHNICAL FIELD

The invention relates to batteries, battery separators, and related methods.

### BACKGROUND

Batteries are commonly used as energy sources. Typically, a battery includes a negative electrode and a positive electrode . The negative and positive electrodes are often disposed in an electrolytic medium. During discharge of a battery, chemical reactions occur wherein an active positive electrode material is oxidized and active negative electrode material is reduced. During the reactions, electrons flow from the positive electrode to the negative electrode through a load, and ions in the electrolytic medium flow between the electrodes. To prevent direct reaction of the active positive electrode material and the active negative electrode material, the electrodes are mechanically and electrically isolated from each other by a separator.

One type of battery is a lead-acid battery. In a lead acid battery, lead is usually an active positive electrode material, and lead dioxide is usually an active negative electrode material. (In a lead-acid battery, the electrodes are often referred to as "plates".) Generally, lead acid batteries also contain sulfuric acid, which serves as an electrolyte and participates in the chemical reactions.

A mat comprised of glass fibers may serve as a separator. The glass mat separator has a critical role in electrolyte filling. Any change in the physical properties of this material can drastically change the quality of the filled and formed battery. The separator structure, degree of compression and fiber composition have a significant influence on how well an unfilled element will accept electrolyte. While high levels of compression are desirable for extended life, this may make the filling and formation process more difficult. When the separator is compressed, the pore size is reduced, along with more restricted access to void, or empty volume in the separator. This will make the filling process more difficult.

When electrolyte is added to the battery, the ideal situation is that all areas are wetted as much as possible by the same amount and concentration of acid so that there is perfectly uniform distribution of electrolyte throughout the plate stack when the filling process is completed. This ideal situation is difficult or impossible to achieve in practice, as there is a dynamic competition between the separator and the plate surfaces for the electrolyte. As the electrolyte penetrates into the plate stack, it is held up by the separator (the capillary forces tend to hold the electrolyte rather strongly), and at the same time the electrolyte is depleted by the exothermic reaction of the sulfuric acid with the plate by the simple chemical reaction of PbO + H₂SO₄ => PbSO₄ + H₂O. As the liquid front penetrates deeper into the stack it becomes more dilute and also gets hotter, due to the exothermic reaction with the lead oxide. One of the likely threats is the formation of hydration shorts/dendrites. As the acid reacts with the lead oxide, the sulfuric acid electrolyte becomes progressively more dilute. Lead sulfate is relatively soluble in the hot electrolyte with low acid strength and near neutral pH, and dissolvedlead sulfate will diffuse into the separator. This will hasten the formation of lead dendrites and/or hydration shorts. A short circuit may develop and be detected during formation, or more subtly the battery will fail prematurely in service due to the formation of lead dendrites through the separator structure. If the filling process is poor or incomplete, individual cells may also have "dry areas" after filling. These poorly wetted areas may include no acid or water (completely dry), dilute acid or just water. These dry areas will slowly become wetted during and after formation, but significant grid corrosion may result due to unformed active material forcing all of the current to flow through the grid only. Unfortunately, design or materials changes that improve battery performance and/or life also tend to make proper filling more difficult.

EP2571079 (A1) discloses a separator for a valve regulated lead-acid battery comprising a paper sheet made by a wet papermaking process, mainly made of glass microfibers, wherein the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 µm as the glass microfibers and has an average pore diameter of 3.5 µm or less, and the thick-fiber layer is made of glass fibers having an average fiber diameter of 1.3 to 4.0 µm as the glass microfibers and has an average pore diameter which is 4.0 µm or more and which is 1.5 times or more that of the thin-fiber layer, wherein the average fiber diameter of the glass fibers in the all layers of the separator is 1.2 µm or more, and the thickness ratio of the thin-fiber layers to the thick-fiber layer in the all layers of the separator is 10/90 to 50/50.

### SUMMARY

There is a need for a battery separator that improves acid filling and therefore improves battery performance and cycle life. A battery separator comprised of a coarse fiber region of a specified thickness disposed between two fine fiber regions can improve acid filling and plate formation by enhancing the diffusion of acid toward the interior region. As a result of improved wettability of such a separator, the density or concentration of the sulfuric acid is, in certain embodiments, maintained at an approximately constant level throughout the bulk of the separator. As a result, a uniform amount and concentration of acid is available for reaction with active material in the plates, thereby leading to homogenous plate formation and uniform active material utilization. This can lead to improved cycle life and reduced defect rate of the battery.

In one aspect, the invention relates to a battery separator, comprising: a coarse fiber region; a first fine fiber region; and a second fine fiber region; wherein the coarse fiber region comprises fibers having an average diameter of greater than or equal to 2 µm ; wherein each of the first and second fine fiber regions independently comprises glass fibers having an average diameter of less than or equal to 2 µm ; provided that the average diameter of the fibers of the coarse fiber region is larger than the average diameter of the fibers of each of the first and second fine fiber regions; wherein the coarse fiber region is disposed between the first fine fiber region and second fine fiber region; and wherein the thickness of the coarse fiber region constitutes 1-30% of the total fiber region thickness.

In one aspect, the invention relates to processes for producing a battery separator, wherein the battery separator comprises a coarse fiber region; a first fine fiber region; and a second fine fiber region; wherein the coarse fiber region is disposed between the first fine fiber region and second fine fiber region; and wherein the process for producing the separator is defined in the claims.

In one aspect, the invention relates to a lead-acid battery comprising a negative plate, a positive plate, and a battery separator disposed between the negative and positive plates, wherein the battery separator comprises: a coarse fiber region; a first fine fiber region; and a second fine fiber region; wherein the coarse fiber region comprises fibers having an average diameter of greater than or equal to 2 µm ; wherein each of the first and second fine fiber regions independently comprises glass fibers having an average diameter of less than or equal to 2 µm; provided that the average diameter of the fibers of the coarse fiber region is larger than the average diameter of the fibers of each of the first and second fine fiber regions; wherein the coarse fiber region is disposed between the first fine fiber region and second fine fiber region; and wherein the thickness of the coarse fiber region constitutes 1-30% of the total fiber region thickness.

### BRIEF DESCRIPTION OF THE DRAWING

FIG. 1 shows how diffusion speed varies based on the thickness of the coarse fiber region relative to the total fiber region thickness.
FIG. 2 shows how compressibility of the separator and diffusion speed vary based on the thickness of the coarse fiber region relative to the total fiber region thickness.
FIG. 3 shows how compressibility of the separator varies based on the thickness of the coarse fiber region relative to the total fiber region thickness.

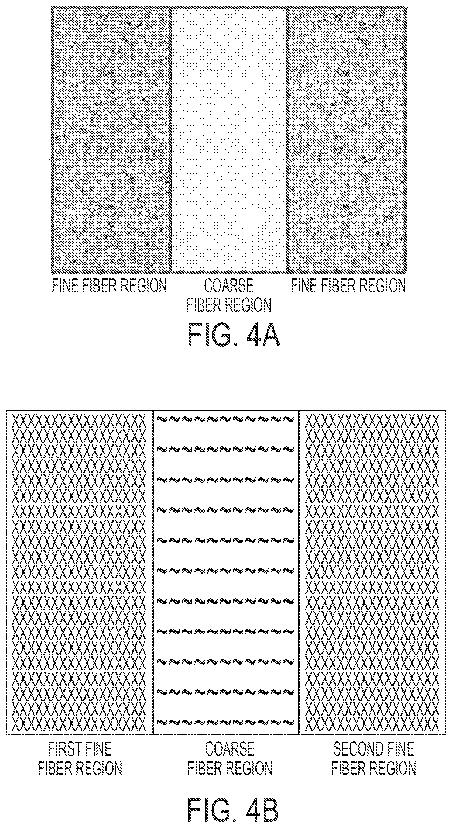

FIG. 4A-4B show a representation and a schematic of one embodiment of a 3-region separator.
FIG. 5 shows the diffusion speed test apparatus for use with the procedure described in Example 2.
FIG. 6A-6D show exemplary embodiments of a separator.
FIG. 7 shows an exemplary density profile of two adjacent regions of a separator formed in a multi-phase papermaking process.

### DETAILED DESCRIPTION

### Definitions

As used herein, "total fiber region thickness" refers to the sum of the thicknesses of the two fine fiber regions and the coarse fiber region.

As used herein, the "thickness" of a region refers to the distance measured perpendicularly to the plane of the region from one end of the region to the opposite end of the region.

As used herein, the "end" of a region refers to: (a) in the case of the end of a fine fiber region that is not adjacent to the coarse fiber region, the outer surface of the fine fiber region, which may also be the outer surface of the separator; (b) in the case where the coarse fiber region is laminated to a fine fiber region, the surface of the region at the point of lamination; (c) in the case where one fiber region transitions into another, such as the result of multi-phase formation, the midpoint of the transition zone, as defined herein.

When a value is stated to be "between" two endpoints or "from" one endpoint to another endpoint, the endpoints are intended to be included. For example, a value "between 2 and 20" or "from 2 to 20" includes both 2 and 20 as well as the values between.

### Composition

### Coarse and Fine Fiber Regions-Generally

In one aspect, the invention relates to a battery separator, comprising: a coarse fiber region; a first fine fiber region; and a second fine fiber region; wherein the coarse fiber region comprises fibers having an average diameter of greater than or equal to 2 µm ; wherein each of the first and second fine fiber regions independently comprises glass fibers having an average diameter of less than or equal to 2 µm ; provided that the average diameter of the fibers of the coarse fiber region is larger than the average diameter of the fibers of each of the first and second fine fiber regions; wherein the coarse fiber region is disposed between the first fine fiber region and second fine fiber region; and wherein the thickness of the coarse fiber region constitutes 1-30% of the total fiber region thickness. In some embodiments, the the coarse fiber region comprises glass fibers having an average diameter of greater than or equal to 2 µm. Here and throughout, average diameter of fibers can be measured by techniques known in the art, e.g., using scanning electron microscopy.

In one aspect, the invention relates to a battery separator, consisting essentially of: a coarse fiber region; a first fine fiber region; and a second fine fiber region; wherein the coarse fiber region comprises fibers having an average diameter of greater than or equal to 2 µm ; wherein each of the first and second fine fiber regions independently comprises glass fibers having an average diameter of less than or equal to 2 µm ; provided that the average diameter of the fibers of the coarse fiber region is larger than the average diameter of the fibers of each of the first and second fine fiber regions; wherein the coarse fiber region is disposed between the first fine fiber region and second fine fiber region; and wherein the thickness of the coarse fiber region constitutes 1-30% of the total fiber region thickness.

In some embodiments, the coarse fiber region comprises fibers having an average diameter from about 2 to about 50 µm. In some embodiments, the coarse fiber region comprises fibers having an average diameter from about 2 to about 20 µm. In some embodiments, the coarse fiber region comprises fibers having an average diameter from about 3 to about 20 µm. In some embodiments, the coarse fiber region comprises fibers having an average diameter from about 3 to about 18 µm. In some embodiments, the coarse fiber region comprises fibers having an average diameter from about 3 to about 15 µm. In some embodiments, the coarse fiber region comprises fibers having an average diameter from about 5 to about 15 µm. In some embodiments, the coarse fiber region comprises fibers having an average diameter from about 7 to about 15 µm. In some embodiments, the coarse fiber region comprises fibers having an average diameter from about 3 to about 12 µm. In some embodiments, the coarse fiber region comprises fibers having an average diameter from about 5 to about 12 µm. In some embodiments, the coarse fiber region comprises fibers having an average diameter from about 7 to about 12 µm. In some embodiments, the coarse fiber region comprises fibers having an average diameter from about 5 to about 10 µm. In some embodiments, the coarse fiber region comprises fibers having an average diameter from about 7 to about 9 µm. In some embodiments, the coarse fiber region comprises fibers having an average diameter of greater than or equal to 2 µm. In some embodiments, the coarse fiber region comprises fibers having an average diameter of greater than or equal to 3 µm. In some embodiments, the coarse fiber region comprises fibers having an average diameter of greater than or equal to 5 µm. In some embodiments, the coarse fiber region comprises fibers having an average diameter of greater than or equal to 7 µm.

In some embodiments, the coarse fiber region comprises glass fibers having an average diameter from about 2 to about 50 µm. In some embodiments, the coarse fiber region comprises glass fibers having an average diameter from about 2 to about 20 µm. In some embodiments, the coarse fiber region comprises glass fibers having an average diameter from about 3 to about 20 µm. In some embodiments, the coarse fiber region comprises glass fibers having an average diameter from about 3 to about 18 µm. In some embodiments, the coarse fiber region comprises glass fibers having an average diameter from about 5 to about 15 µm. In some embodiments, the coarse fiber region comprises glass fibers having an average diameter from about 7 to about 15 µm. In some embodiments, the coarse fiber region comprises glass fibers having an average diameter from about 3 to about 12 µm. In some embodiments, the coarse fiber region comprises glass fibers having an average diameter from about 5 to about 12 µm. In some embodiments, the coarse fiber region comprises glass fibers having an average diameter from about 7 to about 12 µm. In some embodiments, the coarse fiber region comprises glass fibers having an average diameter from about 5 to about 10 µm. In some embodiments, the coarse fiber region comprises glass fibers having an average diameter from about 7 to about 9 µm. In some embodiments, the coarse fiber region comprises glass fibers having an average diameter of greater than or equal to 2 µm. In some embodiments, the coarse fiber region comprises glass fibers having an average diameter of greater than or equal to 3 µm. In some embodiments, the coarse fiber region comprises glass fibers having an average diameter of greater than or equal to 5 µm. In some embodiments, the coarse fiber region comprises glass fibers having an average diameter of greater than or equal to 7 µm.

The average diameter of the glass fibers in the first fine fiber region can be the same or different from the average diameter of the glass fibers in the second fine fiber region, as long as each average diameter is within the specified range. In some embodiments, each of the first and second fine fiber regions independently comprises glass fibers having an average diameter from about 0.1 to about 2 µm. In some embodiments, each of the first and second fine fiber regions independently comprises glass fibers having an average diameter from about 0.4 to about 1.8 µm. In some embodiments, each of the first and second fine fiber regions independently comprises glass fibers having an average diameter from about 0.6 to about 1.6 µm. In some embodiments, each of the first and second fine fiber regions independently comprises glass fibers having an average diameter from about 0.8 to about 1.6 µm. In some embodiments, each of the first and second fine fiber regions independently comprises glass fibers having an average diameter from about 1.0 to about 1.6 µm. In some embodiments, each of the first and second fine fiber regions independently comprises glass fibers having an average diameter from about 1.2 to about 1.6 µm. In some embodiments, each of the first and second fine fiber regions independently comprises glass fibers having an average diameter from about 0.4 to about 1.6 µm. In some embodiments, each of the first and second fine fiber regions independently comprises glass fibers having an average diameter from about 0.4 to about 1.4 µm. In some embodiments, each of the first and second fine fiber regions independently comprises glass fibers having an average diameter from about 0.4 to about 1.2 µm. In some embodiments, each of the first and second fine fiber regions independently comprises glass fibers having an average diameter from about 0.4 to about 1.0 µm. In some embodiments, each of the first and second fine fiber regions independently comprises glass fibers having an average diameter from about 0.4 to about 0.8 µm. In some embodiments, each of the first and second fine fiber regions independently comprises glass fibers having an average diameter from about 1.0 to about 1.4 µm. In some embodiments, each of the first and second fine fiber regions independently comprises glass fibers having an average diameter of less than or equal to 1.8 µm. In some embodiments, each of the first and second fine fiber regions independently comprises glass fibers having an average diameter of less than or equal to 1.6 µm. In some embodiments, each of the first and second fine fiber regions independently comprises glass fibers having an average diameter of less than or equal to 1.4 µm. In some embodiments, each of the first and second fine fiber regions independently comprises glass fibers having an average diameter of less than or equal to 1.2 µm. In some embodiments, each of the first and second fine fiber regions independently comprises glass fibers having an average diameter of less than or equal to 1.0 µm. In some embodiments, each of the first and second fine fiber regions independently comprises glass fibers having an average diameter of less than or equal to 0.8 µm.

### Coarse Fiber Region

In some embodiments, the thickness of the coarse fiber region constitutes 1-30% of the total fiber region thickness. In some embodiments, the thickness of the coarse fiber region constitutes 5-30% of the total fiber region thickness. In some embodiments, the thickness of the coarse fiber region constitutes 5-25% of the total fiber region thickness. In some embodiments, the thickness of the coarse fiber region constitutes 10-30% of the total fiber region thickness. In some embodiments, the thickness of the coarse fiber region constitutes 10-25% of the total fiber region thickness.

In some embodiments, fibers having a specified average diameter account for a specified percentage by weight of the coarse fiber region. In some embodiments, fibers having an average diameter from about 2 to about 50 µm, about 2 to about 20 µm, about 3 to about 20 µm, about 3 to about 18 µm, about 3 to about 15 µm, about 5 to about 15 µm, about 7 to about 15 µm, about 3 to about 12 µm, about 5 to about 12 µm, about 7 to about 12 µm, about 5 to about 10 µm, about 7 to about 9 µm, greater than or equal to 2 µm, greater than or equal to 3 µm, greater than or equal to 5 µm, or greater than or equal to 7 µm account for at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or about 100% of the coarse fiber region by weight. Fibers having each specified range of average diameter can account for each specified percentage by weight of the coarse fiber region. For example, fibers having an average diameter from about 5 to about 10 µm can account for at least 50% by weight of the coarse fiber region, etc.

In some embodiments, the fibers of the coarse fiber region are at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or about 100% glass fibers.

In some embodiments, the coarse fiber region comprises polymeric fibers. In some embodiments, the fibers of the coarse fiber region are at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or about 100% polymeric fibers. The polymeric fibers may be in the form of staple fibers or may form a scrim.

In some embodiments, glass fibers having a specified average diameter account for a specified percentage by weight of the coarse fiber region. In some embodiments, glass fibers having an average diameter from about 2 to about 50 µm, about 2 to about 20 µm, about 3 to about 20 µm, about 3 to about 18 µm, 3 to about 15 µm, about 5 to about 15 µm, about 7 to about 15 µm, about 3 to about 12 µm, about 5 to about 12 µm, about 7 to about 12 µm, about 5 to about 10 µm, about 7 to about 9 µm, greater than or equal to 2 µm, greater than or equal to 3 µm, greater than or equal to 5 µm, or greater than or equal to 7 µm account for at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or about 100% of the coarse fiber region by weight. Glass fibers having each specified range of average diameter can account for each specified percentage by weight of the coarse fiber region. For example, glass fibers having an average diameter from about 5 to about 10 µm can account for at least 50% by weight of the coarse fiber region, etc.

The coarse fiber region can comprise or be a part of a woven or non-woven fiber web. In some embodiments, the coarse fiber region comprises or is a part of a non-woven fiber web. In some embodiments, the coarse fiber region comprises or is a part of a woven fiber web.

### Fine Fiber Region

The thickness of the first fine fiber region can be the same or different from the thickness of the second fine fiber region. In some embodiments, the thickness of the first fine fiber region is from 70 to 130% of the thickness of the second fine fiber region. In some embodiments, the thickness of the first fine fiber region is from 80 to 120% of the thickness of the second fine fiber region. In some embodiments, the thickness of the first fine fiber region is from 90 to 110% of the thickness of the second fine fiber region.

In some embodiments, glass fibers having a specified average diameter account for a specified percentage by weight of the either the first or the second fine fiber region, or each fine fiber region independently. In some embodiments, glass fibers having an average diameter from about 0.1 to about 2 µm, about 0.4 to about 1.8 µm, about 0.6 to about 1.6 µm, about 0.8 to about 1.6 µm, about 1.0 to about 1.6 µm, about 1.2 to about 1.6 µm, about 0.4 to about 1.6 µm, about 0.4 to about 1.4 µm, about 0.4 to about 1.2 µm, about 0.4 to about 1.0 µm, about 0.4 to about 0.8 µm, about 1.0 to about 1.4 µm, less than or equal to 1.8 µm, less than or equal to 1.6 µm, less than or equal to 1.4 µm, less than or equal to 1.2 µm, less than or equal to 1.0 µm, or less than or equal to 0.8 µm account for at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or about 100% of either the first or the second fine fiber region, or each fine fiber region independently, by weight. Glass fibers having each specified range of average diameter can account for each specified percentage by weight of either the first or the second fine fiber region, or each fine fiber region independently. For example, glass fibers having an average diameter from about 0.4 to about 1.8 µm can account for at least 50% by weight of either the first or the second fine fiber region, or each fine fiber region independently, etc.

Either fine fiber region can comprise or be a part of a woven or non-woven fiber web. In some embodiments, a fine fiber region comprises or is a part of a non-woven fiber web. In some embodiments, each of the first and second fine fiber regions comprises or is a part of a non-woven fiber web. In some embodiments, a fine fiber region comprises or is a part of a woven fiber web. In some embodiments, each of the first and second fine fiber regions comprises or is a part of a woven fiber web.

### Glass Fibers

In some embodiments, the glass fibers of any or all of the coarse fiber region and each of the fine fiber regions includes microglass fibers, chopped strand glass fibers, or a combination thereof. Microglass fibers and chopped strand glass fibers are known to those skilled in the art. One skilled in the art is able to determine whether a glass fiber is microglass or chopped strand by observation (e.g., optical microscopy, electron microscopy). The terms refer to the technique(s) used to manufacture the glass fibers. Such techniques impart the glass fibers with certain characteristics. In general, chopped strand glass fibers are drawn from bushing tips and cut into fibers in a process similar to textile production. Chopped strand glass fibers are produced in a more controlled manner than microglass fibers, and as a result, chopped strand glass fibers will generally have less variation in fiber diameter and length than microglass fibers. Microglass fibers are drawn from bushing tips and further subjected to flame blowing or rotary spinning processes. In some cases, fine microglass fibers may be made using a remelting process. In this respect, microglass fibers may be fine or coarse. As used herein, fine microglass fibers are less than 1 µm in diameter and coarse microglass fibers are greater than or equal to 1 µm in diameter.

Microglass fibers may also have chemical differences from chopped strand glass fibers. In some cases, though not required, chopped strand glass fibers may contain a greater content of calcium or sodium than microglass fibers. For example, chopped strand glass fibers may be close to alkali free with high calcium oxide and alumina content. Microglass fibers may contain 10-15% alkali (e.g., sodium, magnesium oxides) and have relatively lower melting and processing temperatures.

The microglass fibers can have small diameters such as less than 10.0 µm. For example, the average diameter of the microglass fibers in a region-as opposed to the average diameter of *all* the glass fibers in a region-may be between 0.1 µm to about 9.0 µm; and, in some embodiments, between about 0.3 µm and about 6.5 µm, or between about 1.0 µm and 5.0 µm. In certain embodiments, the microglass fibers may have an average fiber diameter of less than about 7.0 µm, less than about 5.0 µm, less than about 3.0 µm, or less than about 1.0 µm. In certain embodiments, the microglass fibers may be subjected to a rotary spinning process and have an average fiber diameter of between about 1.0 and about 10.0 µm, e.g., between about 3.0 and about 9.0 µm, between about 5.0 and about 8.0 µm, between about 6.0 and about 10.0 µm, or between about 7.0 and about 9.0 µm; or about 9.5 µm, about 9.0 µm, about 8.5 µm, about 8.0 µm, about 7.5 µm, about 7.0, about 7.0 µm, about 6.5 µm, about 6.0 µm, about 5.5 µm, about 5.0 µm, about 4.5 µm, about 4.0 µm, about 3.5 µm, about 3.0 µm, about 2.5 µm, about 2.0 µm, or about 1.5 µm. Average diameter distributions for microglass fibers are generally log-normal. However, it can be appreciated that microglass fibers may be provided in any other appropriate average diameter distribution (e.g., Gaussian distribution, a distribution with a geometric standard deviation of twice the average diameter, etc.).

The microglass fibers may vary significantly in length as a result of process variations. In some embodiments, the microglass fibers have a length less than or equal to about 30 mm. In some embodiments, the microglass fibers have a length less than or equal to about 6 mm. In some embodiments, the microglass fibers have a length less than or equal to about 12 mm. In some embodiments, the microglass fibers have a length from about 6 mm to about 30 mm. The aspect ratios (length to diameter ratio) of the microglass fibers in a region may be generally in the range of about 100 to 10,000. In some embodiments, the aspect ratio of the microglass fibers in a region are in the range of about 200 to 2500; or, in the range of about 300 to 600. In some embodiments, the average aspect ratio of the microglass fibers in a region may be about 1,000; or about 300. It should be appreciated that the above-noted dimensions are not limiting and that the microglass fibers may also have other dimensions.

Coarse microglass fibers, fine microglass fibers, or a combination of microglass fibers thereof may be included within any particular region. In some embodiments, coarse microglass fibers make up between about 20% by weight and about 90% by weight of the glass fibers in the coarse fiber region and/or one or both of the fine fiber regions. In some cases, for example, coarse microglass fibers make up between about 30% by weight and about 60% by weight of the glass fibers, or between about 40% by weight and about 60% by weight of the glass fibers in the coarse fiber region and/or one or both of the fine fiber regions. For certain embodiments that include fine microglass fibers, the fine microglass fibers make up between about 0% and about 70% by weight of the glass fibers in the coarse fiber region and/or one or both of the fine fiber regions. In some cases, for example, fine microglass fibers make up between about 5% by weight and about 60% by weight of the glass fibers, or between about 30% by weight and about 50% by weight of the glass fibers in the coarse fiber region and/or one or both of the fine fiber regions.

The chopped strand glass fibers may have an average fiber diameter that is greater than the diameter of the microglass fibers. In some embodiments, the chopped strand glass fibers have an average diameter of greater than about 5 µm. For example, the average diameter range may be up to about 30 µm. In some embodiments, the chopped strand glass fibers may have an average fiber diameter between about 5 µm and about 12 µm. In certain embodiments, the chopped strand fibers may have an average fiber diameter of less than about 10.0 µm, less than about 8.0 µm, less than about 6.0 µm. Average diameter distributions for chopped strand glass fibers are generally log-normal. Chopped strand diameters tend to follow a normal distribution. Though, it can be appreciated that chopped strand glass fibers may be provided in any appropriate average diameter distribution (e.g., Gaussian distribution). In some embodiments, chopped strand glass fibers may have a length in the range of between about 0.125 inches and about 1 inch (e.g., about 0.25 inches, or about 0.5 inches). In some embodiments, chopped strand glass fibers may have a length greater than or equal to 1 mm. In some embodiments, chopped strand glass fibers may have a length in the range of between about 3 mm and about 24 mm.

It should be appreciated that the above-noted dimensions are not limiting and that the microglass and/or chopped strand fibers may also have other dimensions.

In some embodiments, the separator has a combination of chopped strand glass fibers and microglass fibers. In some embodiments, the separator may contain between about 0 weight percent to about 100 weight percent chopped strand glass fibers. In some embodiments, the separator may contain between about 5 weight percent to about 15 weight percent chopped strand glass fibers. In some embodiments, the separator may contain between about 0 weight percent to about 100 weight percent microglass fibers. In some embodiments, the separator may contain between about 85 weight percent to about 95 weight percent microglass fibers. In some embodiments, the separator may contain between about 85 weight percent to about 100 weight percent microglass fibers.

In some embodiments, the coarse fiber region has a combination of chopped strand glass fibers and microglass fibers. In some embodiments, the coarse fiber region may contain between about 0 weight percent to about 100 weight percent chopped strand glass fibers. In some embodiments, the coarse fiber region may contain between about 5 weight percent to about 15 weight percent chopped strand glass fibers. In some embodiments, the coarse fiber region may contain between about 0 weight percent to about 100 weight percent microglass fibers. In some embodiments, the coarse fiber region may contain between about 85 weight percent to about 95 weight percent microglass fibers. In some embodiments, the coarse fiber region may contain between about 85 weight percent to about 100 weight percent microglass fibers.

In some embodiments, each of the first and second fine fiber regions independently has a combination of chopped strand glass fibers and microglass fibers. In some embodiments, each of the first and second fine fiber regions independently may contain between about 0 weight percent to about 100 weight percent chopped strand glass fibers. In some embodiments, each of the first and second fine fiber regions independently may contain between about 5 weight percent to about 15 weight percent chopped strand glass fibers. In some embodiments, each of the first and second fine fiber regions independently may contain between about 0 weight percent to about 100 weight percent microglass fibers. In some embodiments, each of the first and second fine fiber regions independently may contain between about 85 weight percent to about 95 weight percent microglass fibers. In some embodiments, each of the first and second fine fiber regions independently may contain between about 85 weight percent to about 100 weight percent microglass fibers.

### Other Materials

Additionally, the separators can include a variety of other materials of construction. For example, the separator can include, in addition to glass fibers, non-glass fibers, natural fibers (e.g., cellulose fibers), synthetic fibers (e.g., polymeric), staple fibers, carbon fibers, nanofibers (electrospun, meltblown, centrifugal spun, etc.), fibrillated fibers, pulps (e.g., wood pulps), binder resin, ceramic materials or any combination thereof. Additionally, the fibers can include thermoplastic binder fibers. Exemplary thermoplastic fibers include bicomponent, polymer-containing fibers, such as sheath-core fibers, side-by-side fibers, "islands-in-the-sea" and/or "segmented-pie" fibers. Examples of types of polymeric fibers include substituted polymers, unsubstituted polymers, saturated polymers, unsaturated polymers (e.g., aromatic polymers), organic polymers, inorganic polymers, straight chained polymers, branched polymers, homopolymers, copolymers, and combinations thereof. Examples of polymer fibers include polyalkylenes (e.g., polyethylene, polypropylene, polybutylene), polyesters (e.g., polyethylene terephthalate), polyamides (e.g., nylons, aramids), halogenated polymers (e.g., polytetrafluoroethylenes), and combinations thereof. Bicomponent fibers can be, e.g., from 1.3 to 15 decitex (weight in grams of 10,000 meters of fiber); can have a fiber length of e.g., 1-24 mm. In some embodiments, the coarse fiber region may contain between about 0 weight percent to about 30 weight percent of bicomponent fibers, (e.g., between about 1% and about 15%, between about 1% and about 8%, between about 6% and about 8%, between about 6% and about 10%, between about 10% and about 15% or between about 10% and about 20%). In some embodiments, each of the first and second fine fiber regions independently may contain between about 0 weight percent to about 30 weight percent of bicomponent fibers, (e.g., between about 1% and about 15%, between about 1% and about 8%, between about 6% and about 8%, between about 6% and about 10%, between about 10% and about 15% or between about 10% and about 20%).

### Separator Characteristics

In some embodiments, the surface area of the separator can range from approximately 0.5 m²/g to approximately 18 m²/g, for example, from approximately 1.3 m²/g to approximately 1.7 m²/g. The surface area can be greater than or equal to approximately 0.5 m²/g, approximately 1 m²/g, approximately 2 m²/g, approximately 3 m²/g, approximately 4 m²/g, approximately 5 m²/g, approximately 6 m²/g, approximately 7 m²/g, approximately 8 m²/g, approximately 9 m²/g, approximately 10 m²/g, approximately 12 m²/g, approximately 15 m²/g or approximately 18 m²/g, and/or less than or equal to approximately 18 m²/g, approximately 15 m²/g, approximately 12 m²/g, approximately 11 m²/g, approximately 10 m²/g, approximately 9 m²/g, approximately 8 m²/g, approximately 7 m²/g, approximately 6 m²/g, approximately 5 m²/g, approximately 4 m²/g, approximately 3 m²/g, approximately 2 m²/g, approximately 1 m²/g, or approximately 0.6 m²/g. The BET surface area is measured according to method number 8 of Battery Council International Standard BCIS-03A (2009 revision), "BCI Recommended Test Methods VRLA-AGM Battery Separators", method number 8 being "Surface Area." Following this technique, the BET surface area is measured via adsorption analysis using a BET surface analyzer (e.g., Micromeritics Gemini II 2370 Surface Area Analyzer) with nitrogen gas; the sample amount is between 0.5 and 0.6 grams in a 3/4 inch tube; and, the sample is allowed to degas at 75 ºC for a minimum of 3 hours.

In some embodiments, the specific surface area of each of the first and second fine fiber regions can independently range from approximately 1.0 m²/g to approximately 2.5 m²/g. For example, the specific surface area of each of the first and second fine fiber regions can independently range from approximately 1.3 m²/g to approximately 2.5 m²/g, from approximately 1.6 m²/g to approximately 2.5 m²/g, from approximately 1.9 m²/g to approximately 2.5 m²/g, from approximately 1.3 m²/g to approximately 2.2 m²/g, from approximately 1.3 m²/g to approximately 1.9 m²/g, or from approximately 1.6 m²/g to approximately 2.2 m²/g. If filler particles are used in a fine fiber region, the specific surface area of that fiber region can be greater than or equal to 2 m²/g.

In some embodiments, the specific surface area of the coarse fiber region can range from approximately 0.1 m²/g to approximately 1.0 m²/g. For example, the specific surface area of the coarse fiber region can range from approximately 0.3 m²/g to approximately 1.0 m²/g, from approximately 0.5 m²/g to approximately 1.0 m²/g, from approximately 0.1 m²/g to approximately 0.9 m²/g, from approximately 0.1 m²/g to approximately 0.7 m²/g, from approximately 0.1 m²/g to approximately 0.5 m²/g, from approximately 0.2 m²/g to approximately 0.8 m²/g, or from approximately 0.3 m²/g to approximately 0.7 m²/g. If filler particles are used in the coarse fiber region, the specific surface area of that fiber region can be greater than or equal to 0.1 m²/g. In some embodiments, the specific surface area of each of the first and second fine fiber regions is greater than the specific surface area of the coarse fiber region.

The basis weight, or grammage, of the separator can range from approximately 15 gsm (grams per square meter, or g/m²) to approximately 500 gsm. In some embodiments, the basis weight ranges from between approximately 20 gsm to approximately 100 gsm. In some embodiments, the basis weight ranges from between approximately 100 gsm to approximately 200 gsm. In some embodiments, the basis weight ranges from approximately 200 gsm to approximately 300 gsm. In some embodiments, the basis weight of the separator ranges from between approximately 15 gsm to approximately 100 gsm. The basis weight or grammage is measured according to method number 3 "Grammage" of Battery Council International Standard BCI5-03A (2009 Rev.) "BCI Recommended test Methods VRLA-AGM Battery Separators."

In some embodiments, the thickness of the separator (i.e., from the outer end of the first fine fiber region to the outer end of the second fine fiber region) can vary. In some embodiments, the thickness of the separator can range from greater than zero to about 5 millimeters. The thickness of the separator can be greater than or equal to about 0.1 mm, about 0.5 mm, about 1.0 mm, about 1.5 mm, about 2.0 mm, about 2.5 mm, about 3.0 mm, about 3.5 mm, about 4.0 mm, or about 4.5 mm; and/or less than or equal to about 5.0 mm, about 4.5 mm, about 4.0 mm, about 3.5 mm, about 3 mm, about 2.5 mm, about 2.0 mm, about 1.5 mm, about 1.0 mm, or about 0.5 mm. In some embodiments, the thickness of the separator ranges from between about 0.1 mm to about 0.9 mm. The thickness is measured according to method number 12 "Thickness" of Battery Council International Standard BCI5-03A (2009 Rev.) "BCI Recommended test Methods VRLA-AGM Battery Separators." This method measures the thickness with a 1 square inch anvil load to a force of 10 kPa (1.5 psi).

In some embodiments, the porosity of the separator is at least 80%, at least 85%, at least 88%, or at least 90%. In some embodiments, the porosity of the separator ranges from 80% to 98%, from 85% to 97%, from 88% to 95%, or from 90% to 95%. The porosity is measured according to Battery Council International Battery Technical Manual BCIS-03A (Rev. Feb02) ("Recommended Battery Materials Specifications: Valve Regulated Recombinant Batteries)", method number 6, "Standard Test Method for Volume Porosity of Recombinant Battery Separator Mats".

In some embodiments, the tensile strength (machine direction) of the separator ranges from about 1 to about 50 lbs/inch, e.g., from about 5 to about 50, from about 10 to about 50, from about 15 to about 50, from about 20 to about 50, from about 25 to about 50, from about 1 to about 45, from about 1 to about 40, from about 1 to about 35, from about 1 to about 30, from about 1 to about 25, from about 1 to about 10, from about 5 to about 45, from about 10 to about 40, or from about 15 to about 35 lbs/inch. The tensile strength is measured according to Battery Council International Battery Technical Manual BCIS-03A (Rev. Feb02) ("Recommended Battery Materials Specifications: Valve Regulated Recombinant Batteries)", method number 13, "Standard Test Method for Tensile Strength and Percent Elongation Measurements on Recombinant Battery Separator Mat".

In some embodiments, the tensile strength (cross direction) of the separator ranges from about 1 to about 50 lbs/inch, e.g., from about 5 to about 50, from about 10 to about 50, from about 15 to about 50, from about 20 to about 50, from about 25 to about 50, from about 1 to about 45, from about 1 to about 40, from about 1 to about 35, from about 1 to about 30, from about 1 to about 25, from about 5 to about 45, from about 10 to about 40, or from about 15 to about 35 lbs/inch. The tensile strength is measured according to BCIS-03A (Rev. Feb02), method number 13.

In some embodiments, the mullen burst strength (dry) of the separator ranges from about 1 to about 100 lbs/inch, e.g., from about 10 to about 100, from about 20 to about 100, from about 30 to about 100, from about 40 to about 100, from about 50 to about 100, from about 1 to about 90, from about 1 to about 80, from about 1 to about 70, from about 1 to about 60, from about 1 to about 50, from about 10 to about 50, from about 10 to about 90, from about 20 to about 80, or from about 30 to about 70 lbs/inch. The mullen burst strength is measured according to TAPPI T 403 om-10 (Rev 2010), "Bursting strength of paper".

In some embodiments, the puncture resistance of the separator ranges from about 0.1 to about 3.0 kg, e.g., from about 0.2 to about 2.7, from about 0.3 to about 2.4, from about 0.4 to about 2.1, from about 0.4 to about 2.4, from about 0.4 to about 2.7, from about 0.3 to about 2.1, from about 0.2 to about 2.1, from about 0.1 to about 2.1, from about 0.6 to about 1.9, or from about 0.8 to about 1.7 kg. The puncture resistance is measured according to Battery Council International Battery Technical Manual BCIS-03B (Rev. Dec02) ("BCI Recommended Materials Specifications: Battery Separator Test Methods)", method number 28 ("Standard Test Method to Determine Pin Puncture Resistance of Battery Separator Using a Motorized Chatillon Tester").

### Separator Performance

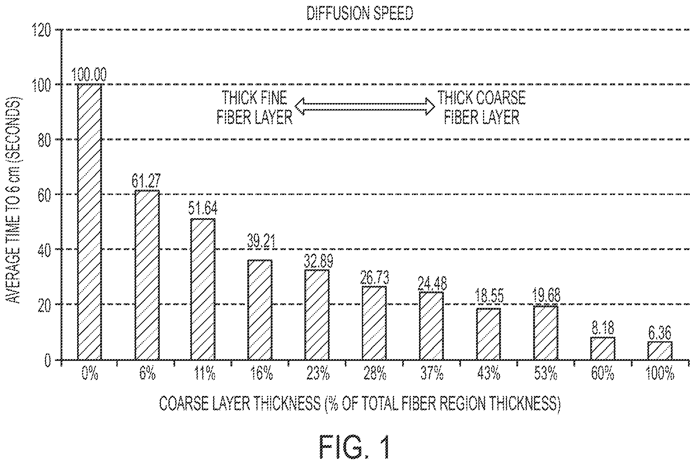

As shown in FIG. 1 and Table 1, below, a separator of the invention exhibits a faster diffusion speed, measured according to the procedure of Example 2, than standard absorptive glass mat (AGM) separators. The values shown in FIG. 1 are normalized to 100 seconds for the AGM with high surface area.

Nine separators of the invention were produced as described in Example 1, below. The diffusion speeds, measured according to the procedure of Example 2, of these separators are shown in Table 1, compared to two standard absorptive glass mat separators and a separator having only a coarse fiber region.

**Table 1**

| **Separator** | **Coarse Fiber Region Thickness⁴** | **Average Diffusion Time to 6 cm (seconds)** | **Average % Improvement⁵** | **Compressibility⁶** |
|---|---|---|---|---|
| Standard AGM¹ | 0 | 550 | 0 | 30.9 |
| Standard AGM² | 0 | 382 | 31 | 31.4 |
| 3-region³ | 6 | 337 | 39 | 28.8 |
| 3-region³ | 11 | 284 | 48 | 28.0 |
| 3-region³ | 16 | 199 | 64 | 30.2 |
| 3-region³ | 23 | 181 | 67 | 31.3 |
| 3-region³ | 28 | 147 | 73 | 29.7 |
| 3-region³ | 37* | 135 | 76 | 34.9 |
| 3-region³ | 43* | 102 | 81 | 35.1 |
| 3-region³ | 54* | 108 | 80 | 35.0 |
| 3-region³ | 60* | 45 | 92 | 36.4 |
| Coarse Fiber Only | 100* | 35 | 95 | 41.5 |
| ¹AGM with high surface area (1.8 m²/g): 79% glass microfibers (0.6 to 0.9 µm dia), 15% PET core/PE sheath bicomponent organic fibers (1.3 DTEX, 12 mm long), 6% chopped strand (13.5 µm dia, ½ inch long) glass fibers | | | | |
| ²AGM with low surface area (1.1 m²/g): 11% glass microfibers (0.6 to 0.9 µm dia), 68% glass microfibers (1.3 to 1.6 µm dia) 15% PET core/PE sheath bicomponent organic fibers (1.3 DTEX, 12 mm long), 6% chopped strand (13.5 µm dia, ½ inch long) glass fibers | | | | |
| ³ Fine fiber region/Coarse fiber region/Fine fiber region | | | | |
| ⁴% of Total Fiber Region Thickness (±5%) * These examples are provided for information only and do not form part of the invention | | | | |
| ⁵ % Improvement in diffusion speed compared to AGM with high surface area (1.8 m²/g) | | | | |
| ⁶ Expressed as % change in thickness | | | | |

In some embodiments, the diffusion speed of the separator ranges from greater than 35 to less than 382 seconds. In some embodiments, the diffusion speed of the separator ranges from about 100 to about 350 seconds. In some embodiments, the diffusion speed of the separator ranges from about 100 to about 300 seconds. In some embodiments, the diffusion speed of the separator ranges from about 100 to about 275 seconds. In some embodiments, the diffusion speed of the separator ranges from about 100 to about 250 seconds. In some embodiments, the diffusion speed of the separator ranges from about 100 to about 200 seconds. In some embodiments, the diffusion speed of the separator ranges from about 100 to about 180 seconds. In some embodiments, the diffusion speed of the separator ranges from about 110 to about 300 seconds. In some embodiments, the diffusion speed of the separator ranges from about 125 to about 300 seconds. In some embodiments, the diffusion speed of the separator ranges from about 125 to about 275 seconds. In some embodiments, the diffusion speed of the separator ranges from about 125 to about 250 seconds. In some embodiments, the diffusion speed of the separator ranges from about 125 to about 200 seconds. In all embodiments, diffusion speed is measured according to the procedure of Example 2.

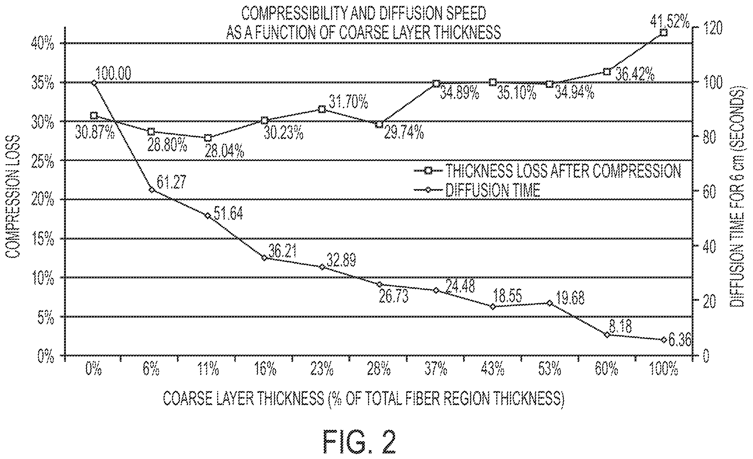

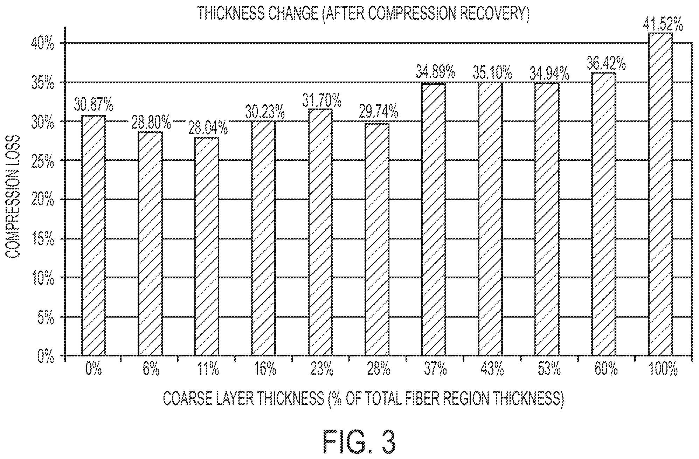

As shown in FIG. 2 , a desirable balance between diffusion speed and compressibility is achieved with a separator of the invention. The diffusion speeds shown in FIG. 2 are measured according the procedure of Example 2. Compressibility in FIG. 2 and FIG. 3 is measured according to Battery Council International Battery Technical Manual BCIS-03A (Rev. Feb02) ("Recommended Battery Materials Specifications: Valve Regulated Recombinant Batteries)", method number 15, " Test Method for Determining the Compressibility of Recombinant Battery Separator Mat", and converted to % change in thickness of the separator (thickness measured before and after compression test).

In some embodiments, the compressibility of the separator, expressed as % change in thickness of the separator, ranges from about 25% to about 40%. In some embodiments, the compressibility of the separator ranges from about 27% to about 37% change in thickness. In some embodiments, the compressibility of the separator ranges from about 28% to about 35% change in thickness.

In some embodiments, the diffusion speed of the separator ranges from greater than 35 to less than 382 seconds, and the compressibility of the separator ranges from about 25% to about 40% change in thickness. In some embodiments, the diffusion speed of the separator ranges from about 100 to about 350 seconds, and the compressibility of the separator ranges from about 28% to about 35% change in thickness. In some embodiments, the diffusion speed of the separator ranges from about 125 to about 300 seconds, and the compressibility of the separator ranges from about 28% to about 35% change in thickness.

### Processes

### Making a Separator-Generally

The processes for producing the battery separators according to the invention are defined in the claims. A separator of the invention can be produced using a wet laid or a dry laid process. In general, a wet laid process involves mixing together the fibers; for example, glass fibers (e.g., chopped strand and/or microglass) may be mixed together, optionally with any synthetic fibers, to provide a glass fiber slurry. In some cases, the slurry is an aqueous-based slurry. In certain embodiments, the microglass fibers, and optionally any chopped strand and/or synthetic fibers, are stored separately in various holding tanks prior to being mixed together. These fibers may be processed through a pulper before being mixed together. In some embodiments, combinations of chopped strand glass fibers, microglass fibers, and/or synthetic fibers are processed through a pulper and/or a holding tank prior to being mixed together. As discussed above, microglass fibers may include fine microglass fibers and coarse microglass fibers.

It should be appreciated that any suitable method for creating a glass fiber slurry may be used. In some cases, additional additives are added to the slurry to facilitate processing. The temperature may also be adjusted to a suitable range, for example, between 33 °F and 100 °F (e.g., between 50 °F and 85 °F). In some embodiments, the temperature of the slurry is maintained. In some cases, the temperature is not actively adjusted.

In some embodiments, the wet laid process uses similar equipment as a conventional papermaking process, which includes a hydropulper, a former or a headbox, a dryer, and an optional converter. For example, the slurry may be prepared in one or more pulpers. After appropriately mixing the slurry in a pulper, the slurry may be pumped into a headbox, where the slurry may or may not be combined with other slurries or additives may or may not be added. The slurry may also be diluted with additional water such that the final concentration of fiber is in a suitable range, such as for example, between about 0.1% to 0.5% by weight.

In some cases, the pH of the glass fiber slurry may be adjusted as desired. For instance, the pH of the glass fiber slurry may range between about 1.5 and about 4.5, or between about 2.6 and about 3.2.

Before the slurry is sent to a headbox, the slurry may be passed through centrifugal cleaners for removing unfiberized glass or shot. The slurry may or may not be passed through additional equipment such as refiners or deflakers to further enhance the dispersion of the fibers. Fibers may then be collected on a screen or wire at an appropriate rate using any suitable machine, e.g., a fourdrinier, a rotoformer, a cylinder, an inclined wire fourdrinier, a gap former, a twin wire, a multiply former, a pressure former, a top former, etc.).

In some embodiments, the process involves introducing binder (and/or other components) into a pre-formed glass fiber layer. In some embodiments, as the glass fiber layer is passed along an appropriate screen or wire, different components included in the binder, which may be in the form of separate emulsions, are added to the glass fiber layer using a suitable technique. In some cases, each component of the binder resin is mixed as an emulsion prior to being combined with the other components and/or glass fiber layer. In some embodiments, the components included in the binder may be pulled through the glass fiber layer using, for example, gravity and/or vacuum. In some embodiments, one or more of the components included in the binder resin may be diluted with softened water and pumped into the glass fiber layer.

In other embodiments, a dry laid process is used. In a dry laid process, glass fibers are chopped and dispersed in air that is blown onto a conveyor, and a binder is then applied. Dry laid processing is typically more suitable for the production of highly porous media including bundles of glass fibers. In some embodiments, when the coarse fiber region is produced separately (to be laminated to the first and second fine fiber regions), the coarse fiber regions is produced using a dry laid process.

Any number of intermediate processes (e.g., pressing, calendering, laminating, etc.) and addition of additives may be utilized throughout the separator formation process. Additives can also be added either to the slurry or to the separator as it is being formed, including but not limited to, salts, fillers including silica, binders, and latex. In some embodiments, the additives may comprise between about 0% to about 30% by weight of the separator. During the separator forming process, various pH values may be utilized for the slurries. Depending on the glass composition, the pH value may range from approximately 2 to approximately 4. Furthermore, the drying temperature may vary, also depending on the fiber composition. In various embodiments, the drying temperature may range from approximately 100 °C to approximately 700 °C. The separator may comprise more than one layer, each layer optionally comprising different types of fibers with different physical and chemical characteristics.

### Multi-phase Process

A multi-phase process may be used to make two or three regions of a separator as a composite article. As an example, a three-region separator or a two-region portion thereof may be prepared by a wet laid process where a first fiber slurry (e.g., glass fibers in an aqueous solvent such as water) is applied onto a wire conveyor to form a first layer. A second fiber slurry comprising fibers (e.g., glass fibers in an aqueous solvent such as water) is then applied onto the first layer. Vacuum may be continuously applied to the first and second slurries during the above process to remove solvent from the fibers, resulting in the simultaneous formation of the first and second fiber regions into a composite article. The composite article is then dried. Due to this fabrication process, at least a portion of the fibers in the first region can be intermingled with at least a portion of the fibers from the second region (e.g., at the interface between the two layers), to form a transition zone. A third region can also be formed and added using a similar process or a different process such as lamination, co-pleating, or collation (i.e., placed directly adjacent one another and kept together by pressure). For example, in some cases, two layers are formed into a composite article by a wet laid process in which separate fiber slurries are laid one on top of the other as water is drawn out of the slurry, and the composite article is then combined with a third layer by any suitable process (e.g., lamination, co-pleating, or collation).

Thus, in one aspect the invention relates to a process for producing a battery separator, comprising: a coarse fiber region; a first fine fiber region; and a second fine fiber region; wherein the coarse fiber region is disposed between the first fine fiber region and the second fine fiber region; and wherein the thickness of the coarse fiber region constitutes 1-30% of the total fiber region thickness; wherein the process for producing the battery separator comprises: (a) providing a first slurry of glass fibers having an average diameter from about 0.1 to about 2 µm ; (b) laying down the first slurry on a wire of a papermaking machine; (c) providing a second slurry of fibers having an average diameter from about 2 to about 50 µm; provided that the average diameter of the fibers of the second slurry is larger than the average diameter of the fibers of the first slurry; (d) laying down the second slurry on top of the first slurry; and (e) dewatering the first and second slurries to form a 2-layer structure comprising the first fine fiber region and at least a portion of the coarse fiber region; and (f) providing a fiber mat comprising glass fibers having an average diameter from about 0.1 to about 2 µm, provided that the average diameter of the fibers of the second slurry is larger than the average diameter of the fibers of the fiber mat; and (g) laminating the 2-layer structure formed in step (e) to the fiber mat to form a separator.

The multi-phase process can also include the use of one or more lamellas and more than one flow zone. For example, a system used to make the separator (e.g., a papermaking machine) can include flow distributors (e.g., headboxes) configured to dispense one or more fiber slurries into a flow zone positioned downstream of the one or more flow distributors. In some embodiments, a single flow distributor is present. In other embodiments, two or more flow distributors can be present (e.g., for introducing two or more fiber slurries into the system) In some embodiments, a distributor block can be positioned between the one or more flow distributors and the flow zone. The distributor block may help to evenly distribute the one or more fiber slurries across the width of the flow zone upon the slurry(ies) entering the flow zone. Different types of distributor blocks are known in the art and can be used in the processes described herein.

A system used to make a separator of the invention (e.g., a papermaking machine) can include a lamella positioned in the flow zone. The lamella may be used as a partition to divide the flow zone into a lower portion and an upper portion (or into additional portions when multiple lamellas are present). In certain embodiments, the lamella can be used to separate a first fiber slurry flowing in the lower portion of the flow zone from a second fiber slurry flowing in the upper portion of the flow zone. For example, a first fiber slurry dispensed from a first flow distributor into the lower portion of the flow zone may be separated from a second fiber slurry dispensed from a second flow distributor into the upper portion of the flow zone until the mixtures reach a downstream end of the lamella, after which the first and second fiber slurries are allowed to meet. The first and second fiber slurries generally flow in the lower and upper portions of the flow zone in a downstream direction.

As described above, a lamella may be positioned in the flow zone to partition the flow zone into at least an upper portion and a bottom portion. A single lamella can be used, or the flow zone can include more than one lamella for separating three or more fiber slurries. In some such embodiments, the flow zone can be separated into three, four, or more distinct portions, each of which can contain a different fiber slurry or the same fiber slurry. The lamella can be positioned in any suitable position within the flow zone, and can vary depending on relative volumes of the fiber slurries in the upper and lower portions of the flow zone. For example, the lamella can be positioned at the center of a distributor block to allow substantially equal volumes and/or flow velocities of the fiber slurries in each of the upper and lower portions of the flow zone, while in other embodiments the lamella can be positioned higher or lower with respect to the distributor block to allow a larger or smaller portion of one fiber slurry in the flow zone relative to the other. Furthermore, the lamella can be positioned at a slight decline with respect to the horizontal, or the lamella can be substantially horizontal, or positioned at an incline with respect to the horizontal. Other positions of the lamella in the flow zone are also possible.

A lamella can be attached to a portion of a system for forming the separator using any suitable attachment technique. In some embodiments, a lamella is attached directly to a distributor block. In other embodiments, a lamella is attached to a threaded rod positioned vertically within a portion of the flow zone. In certain embodiments, attachment involves the use of adhesives, fasteners, metallic banding systems, railing mechanisms, or other support mechanisms. Other attachment mechanisms are also possible.

### Forming the Three-region Separator

Any and all means of forming a coarse fiber region disposed between two fine fiber regions are contemplated to be within the scope of the invention. For example, two fiber regions can be disposed adjacent to each other as the result of a multi-phase process, such as that described above, in which the division of the regions is considered to be at the midpoint of the transition zone. As discussed below, the midpoint of the transition zone is the midpoint of the density differential between the two regions. The density differential can be determined by measuring the density gradient profile in the thicknesswise direction. Any suitable technique may be used to measure the density gradient profile. One such method uses a QTRS Tree ring scanner and data analyzer model no. QTRS-01X (Quintek Measurement Systems, Knoxville, TN).

When a battery separator is made using a multi-phase forming process, the forming process causes fibers on the top phase to migrate and intermingle with fibers on the bottom phase, creating a transition zone. The apparent density of this zone may vary across the zone.

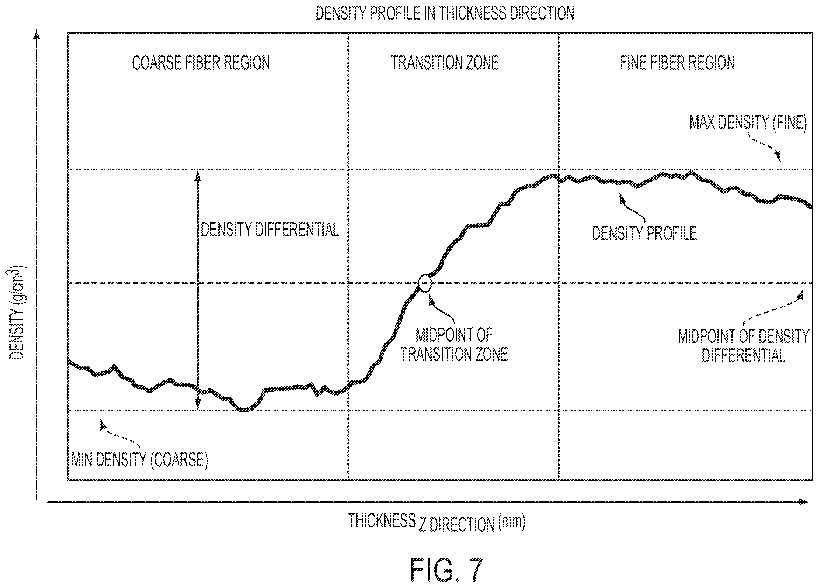

The apparent density (referred to as "density" herein) of a separator is measured as the grammage of the separator in g/m² per unit thickness of the separator (e.g., in gsm/mm). If the density of a separator is profiled in the thickness direction (normal to the surface of the separator), a gradient in density may be observed. This gradient indicates that the density of the separator decreases across the density profile from a region with fibers having a comparatively lower average diameter (i.e., a fine fiber region) to a region with fibers having a comparatively higher average diameter (i.e., the coarse fiber region) because the total void volume in the coarse fiber region is larger than that of the fine fiber region. In the transition zone, across the density profile from fine fiber region to coarse fiber region, the density decreases from the fine fiber region to the coarse fiber region. The density gradient created as a result, can be measured as described above. Referring to the density profile data obtained, the region where the density starts to change from one region to the adjacent region, is considered the transition zone. The midpoint of the density differential between one region and the adjacent region is the midpoint of the transition zone. An exemplary density profile and identification of the midpoint of the transition zone between two adjacent regions of a separator formed in a multi-phase papermaking process is shown in FIG. 7. The change in density of the separator across the coarse fiber region, through the transition zone, and across the fine fiber region is shown. As illustrated in FIG. 7, the density differential is the difference between the minimum density in the coarse fiber region and the maximum density in the fine fiber region. The point at which the density profile reaches the midpoint of this differential (i.e., the density value that is half-way between them) is the midpoint of the transition zone. The location on the thickness axis having the density of the midpoint of the transition zone defines the end of each of the two fiber regions.

Alternatively, two separately-formed fiber regions can be laminated to each other, in which case each of the regions may appear to be a discrete layer. Combinations of a multi-phase process formation and lamination which result in the coarse fiber region being disposed between the first fine fiber region and second fine fiber region, wherein the thickness of the coarse fiber region constitutes 1-30% of the sum of the thicknesses of the coarse fiber region, the first fine fiber region and the second fine fiber region are contemplated to be within the scope of the invention.

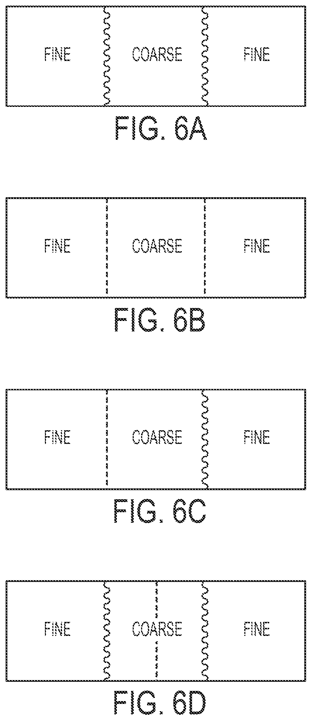

In some embodiments, the separator is made by a multi-phase process, in which there is a first transition zone between the first fine fiber region and the coarse fiber region, and there is a second transition zone between the coarse fiber region and the second fine fiber region. This embodiment is illustrated in FIG. 6A, in which a wavy line separating two regions indicates that there is a transition zone between the two regions. For this embodiment, in the multi-phase process described above, each "layer" formed is a fiber region of the separator.

In one aspect the invention relates to a process for forming a battery separator, comprising: a coarse fiber region; a first fine fiber region; and a second fine fiber region; wherein the coarse fiber region is disposed between the first fine fiber region and the second fine fiber region; the process comprising: (a) providing a first slurry of glass fibers having an average diameter from about 0.1 to about 2 µm ; (b) laying down the first slurry on a wire of a papermaking machine; (c) providing a second slurry of fibers having an average diameter from about 2 to about 50 µm; provided that the average diameter of the fibers of the second slurry is larger than the average diameter of the fibers of the first slurry; (d) laying down the second slurry on top of the first slurry; (e) providing a third slurry of glass fibers having an average diameter from about 0.1 to about 2 µm ; provided that the average diameter of the fibers of the third slurry is smaller than the average diameter of the fibers of the second slurry; (f) laying down the third slurry on top of the second slurry; and (g) dewatering the first, second and third slurries to form the separator, such that the thickness of the coarse fiber region constitutes 1-30% of the sum of the thicknesses of the coarse fiber region and the first and second fine fiber regions.

In some embodiments, the separator is made by separately forming a coarse fiber layer, a first fine fiber layer and a second fine fiber layer, and laminating the coarse fiber layer to each of the fine fiber layers. This embodiment is illustrated in FIG. 6B, in which a dashed line separating two regions indicates that the two regions have been separately formed and then joined together, so that there is no transition zone. This is different to the processes defined in the claims.

In some embodiments, the separator is made by separately forming a first layer comprising a first fine fiber region; separately forming a second layer comprising a coarse fiber region and a second fine fiber region by a multi-phase process, in which there is a transition zone between the coarse fiber region and the second fine fiber region; and laminating the two layers together. This embodiment is illustrated in FIG. 6C, in which a dashed line separating two regions indicates that the two regions have been separately formed and then joined together, so that there is no transition zone; and a wavy line separating two regions indicates that there is a transition zone between the two regions. For this embodiment, in the multi-phase process described above, each "layer" formed is a fiber region of the separator.

In one aspect the invention relates to a process for forming a battery separator comprising: a coarse fiber region; a first fine fiber region; and a second fine fiber region; wherein the coarse fiber region is disposed between the first fine fiber region and the second fine fiber region; the process comprising: (a) providing a first slurry of glass fibers having an average diameter from about 0.1 to about 2 µm ; (b) laying down the first slurry on a wire of a papermaking machine; (c) providing a second slurry of fibers having an average diameter from about 2 to about 50 µm; provided that the average diameter of the fibers of the second slurry is larger than the average diameter of the fibers of the first slurry; (d) laying down the second slurry on top of the first slurry; (e) dewatering the first and second slurries to form a 2-layer structure; (f) providing a fiber mat comprising glass fibers having an average diameter from about 0.1 to about 2 µm ; provided that the average diameter of the fibers of the second slurry is larger than the average diameter of the fibers of the fiber mat; and (g) laminating the 2-layer structure formed in step (e) to the fiber mat to form the separator, wherein the 2-layer structure comprises the first fine fiber region and the coarse region, and the fiber mat comprises the second fine fiber region, such that the thickness of the coarse fiber region constitutes 1-30% of the sum of the thicknesses of the coarse fiber region and the first and second fine fiber regions.

In some embodiments, the separator can be made by separately forming a first layer comprising a first fine fiber region and a coarse fiber region by a multi-phase process, in which there is a first transition zone between the first fine fiber region and the coarse fiber region; separately forming a second layer comprising a coarse fiber region and a second fine fiber region by a multi-phase process, in which there is a second transition zone between the coarse fiber region and the second fine fiber region; and laminating the two layers together such that the two separately formed coarse fiber regions laminated together make up a single coarse fiber region of the separator. This embodiment is illustrated in FIG. 6D, in which a dashed line separating two regions indicates that the two regions have been separately formed and then joined together, so that there is no transition zone; and a wavy line separating two regions indicates that there is a transition zone between the two regions. For this embodiment, in the multi-phase process described above, each fine "layer" formed is a fine fiber region of the separator, while the two coarse "layers" are combined to form the coarse fiber region. This is different to the processes defined in the claims.

Thus, in one aspect the disclosure relates to a battery separator, comprising: a coarse fiber region; a first fine fiber region; and a second fine fiber region; wherein the coarse fiber region is disposed between the first fine fiber region and the second fine fiber region; and wherein the thickness of the coarse fiber region constitutes 1-30% of the total fiber region thickness; wherein the battery separator is produced by a process comprising: (a) providing a first slurry of glass fibers having an average diameter from about 0.1 to about 2 µm; (b) laying down the first slurry on a wire of a papermaking machine; (c) providing a second slurry of fibers having an average diameter from about 2 to about 50 µm; provided that the average diameter of the fibers of the second slurry is larger than the average diameter of the fibers of the first slurry; (d) laying down the second slurry on top of the first slurry; (e) dewatering the first and second slurries to form a first 2-layer structure comprising the first fine fiber region and a portion of the coarse fiber region; (f) providing a third slurry of glass fibers having an average diameter from about 0.1 to about 2 µm ; (g) laying down the third slurry on a wire of a papermaking machine (separate from the first and second slurries); (h) providing a fourth slurry of fibers having an average diameter from about 2 to about 50 µm; provided that the average diameter of the fibers of the fourth slurry is larger than the average diameter of the fibers of the third slurry; (i) laying down the fourth slurry on top of the third slurry; (j) dewatering the third and fourth slurries to form a second 2-layer structure comprising the second fine fiber region and a portion of the coarse fiber region; and (k) laminating the first 2-layer structure to the second 2-layer structure to form the separator.

In any of the above processeses and embodiments, scrim can be used as the coarse fiber region, provided that such coarse fiber region comprises fibers (e.g., glass fibers) having an average diameter of greater than or equal to 2 µm. For example, the scrim can be laminated to the first fine fiber region and the second fine fiber region. Alternatively, the first fine fiber region can be formed on scrim on a paper machine, and then the second fine fiber region can be laminated to the other side of the scrim.

### Batteries

In one aspect, the invention relates to a lead-acid battery comprising a negative plate, a positive plate, and a battery separator disposed between the negative and positive plates, wherein battery separator comprises: a coarse fiber region; a first fine fiber region; and a second fine fiber region; wherein the coarse fiber region comprises glass fibers having an average diameter of greater than or equal to 2 µm ; wherein each of the first and second fine fiber regions independently comprises glass fibers having an average diameter of less than or equal to 1.8 µm; wherein the coarse fiber region is disposed between the first fine fiber region and second fine fiber region; and wherein the thickness of the coarse fiber region constitutes 1-30% of the total fiber region thickness.

The battery can comprise any embodiment of the separator described herein.

It is to be understood that the other components of the battery that are not explicitly discussed herein can be conventional battery components. Positive plates and negative plates can be formed of conventional lead acid battery plate materials. For example, in container formatted batteries, plates can include grids that include a conductive material, which can include, but is not limited to, lead, lead alloys, graphite, carbon, carbon foam, titanium, ceramics (such as Ebonex®), laminates and composite materials. The grids are typically pasted with active materials. The pasted grids are typically converted to positive and negative battery plates by a process called "formation." Formation involves passing an electric current through an assembly of alternating positive and negative plates with separators between adjacent plates while the assembly is in a suitable electrolyte.

As a specific example, positive plates contain lead as the active material, and negative plates contain lead dioxide as the active material. Plates can also contain one or more reinforcing materials, such as chopped organic fibers (e.g., having an average length of 0.125 inch or more), chopped glass fibers, metal sulfate(s) (e.g., nickel sulfate, copper sulfate), red lead (e.g., a Pb₃O₄-containing material), litharge, paraffin oil, and/or expander(s). In some embodiments, an expander contains barium sulfate, carbon black and lignin sulfonate as the primary components. The components of the expander(s) can be pre-mixed or not pre-mixed. Expanders are commercially available from, for example, Hammond Lead Products (Hammond, IN) and Atomized Products Group, Inc. (Garland, TX). An example of a commercially available expander is Texex® expander (Atomized Products Group, Inc.). In certain embodiments, the expander(s), metal sulfate(s) and/or paraffin are present in positive plates, but not negative plates. In some embodiments, positive plates and/or negative plates contain fibrous material or other glass compositions.

A battery can be assembled using any desired technique. For example, separators are wrapped around plates (e.g., cathode plates, anode plates). positive plates, negative plates and separators are then assembled in a case using conventional lead acid battery assembly methods. In certain embodiments, separators are compressed after they are assembled in the case, i.e., the thickness of the separators are reduced after they are placed into the case. An electrolytic mixture (e.g., just sulfuric acid, or sulfuric acid and silica, sulfuric acid and particles of the glass compositions described herein, etc.) is then disposed in the case.

The electrolytic mixture can include other compositions. For example, the electrolytic mixture can include liquids other than sulfuric acid, such as a hydroxide (e.g., potassium hydroxide). In some embodiments, the electrolytic mixture includes one or more additives, including but not limited to a mixture of an iron chelate and a magnesium salt or chelate, organic polymers and lignin and/or organic molecules, and phosphoric acid. In some embodiments, the electrolyte is sulfuric acid. In some embodiments, the specific gravity of the sulfuric acid is between 1.21 g/cm³ and 1.32 g/cm³, or between 1.28 g/cm³ and 1.31 g/cm³. In certain embodiments the specific gravity of the sulfuric acid is 1.26 g/cm³. In certain embodiments the specific gravity of the sulfuric acid is about 1.3 g/cm³.

### EXAMPLES

### Example 1. Formation of 3-region separator.

### Composition

Composition A (Fine fiber region) - 86% glass microfibers (diameter 0.8 to 1.4 µm, average diameter 1.1 µm), 8% PET core/PE sheath bicomponent organic fibers (1.3 DTEX, 12 mm long), 6% chop strand (13.5 µm dia, ½ inch long) glass fibers
Composition B (Coarse fiber region) - 86% glass microfiber (diameter 8.5 µm), 8% PET core/PE sheath bicomponent organic fibers (1.3 DTEX, 12 mm long), 6% chop strand (13.5 µm dia, ½ inch long) glass fibers

Fibers for Composition A were added to a hydropulper one by one containing water and sulfuric acid to form a fiber dispersion slurry. pH was maintained at 2.7. The fiber slurry was stored in a chest (tank) under agitation. The same process was repeated for Composition B and the fiber slurry thus prepared was stored in a second chest under agitation. The two chests supplied the slurries to the pressurized headbox of the paper machine (Fourdrinier). Composition A formed the bottom flow and Composition B formed the top flow in the pressurized headbox. The two flows were separated by a lamella. Composition A was the first layer to contact the wire of the forming zone using dewatering (vacuum). Further down the wire, the point where lamella ended, Composition B contacted the top of Composition A, thus creating a two layer structure with 100 gsm of fine fiber region (composition A) as base and 20 gsm of coarse fiber region (composition B) as top. Vacuum was used to dewater the two layerseparator. The two layer separator was then dried using steam heated drier cans and a through-air dryer (hot air causes melting of sheath of bico fibers and creates bonding between organic fiber and glass fibers). The two-layer battery separator was collected at the other end of the machine on rolls. The two-layer separator thus made, was then laminated to a single layer battery separator (made from Composition A, forming the second fine fiber region) wherein the coarse region of the two layer separator was in physical contact with the single layer separator. A three-region separator was thus created with the coarse fiber region disposed between two fine fiber regions.

Using this procedure, the following 3-region separators were created. To form the different 3-region separators, 40 gsm to 80 gsm of coarse fiber region was obtained by changing the flow rate and consistency for the slurry of composition B, while keeping the 100 gsm fine fiber region constant. Separately, a 100 gsm fine fiber region (composition A) and a 80 gsm coarse fiber region (composition B) were obtained independently. These were combined to form the different 3-region separators shown in table below.

**TABLE 1**

| fine fiber region | coarse fiber region | fine fiber region | coarse layer thickness¹ |
|---|---|---|---|
| 100 gsm | 20 gsm | 100 gsm | 6 |
| 100 gsm | 40 gsm | 100 gsm | 11 |
| 100 gsm | 50 gsm | 100 gsm | 16 |
| 100 gsm | 60 gsm | 100 gsm | 23 |
| 100 gsm | 80 gsm | 100 gsm | 28 |
| 100 gsm | 120 gsm | 100 gsm | 37* |
| 100 gsm | 160 gsm | 100 gsm | 43* |
| 100 gsm | 240 gsm | 100 gsm | 54* |
| 100 gsm | 300 gsm | 100 gsm | 60* |
| ¹ % of Total Fiber Region Thickness | | | |
| * These examples do not form part of the invention and are provided for information purposes only | | | |

### Example 2. Measurement of diffusion speed.

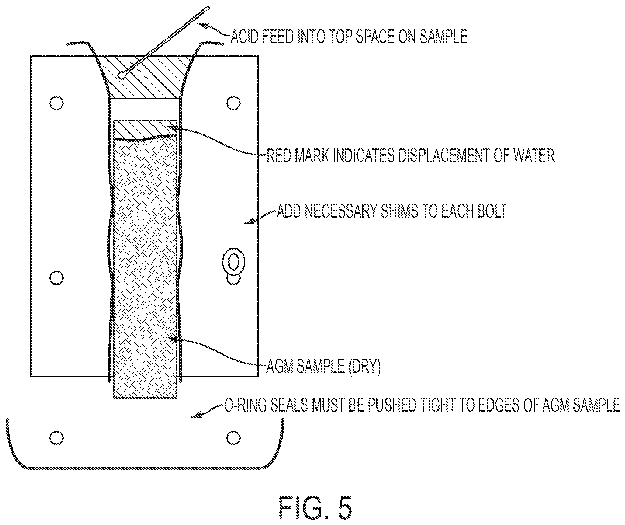

1. The speed at which sulfuric acid diffuses in a separator while under compression can be measured using the following procedure.
2 Equipment
   2.1 Methyl red, diluted in 1.28 specific gravity sulfuric acid (1:100 dilution)
   2.2 Glass-mat separator
   2.3 300 x 150 x 50mm Perspex blocks, with holes drilled for attaching
   2.4 Screw-thread, nuts and washers
   2.5 Shims, various thicknesses, for the required gap
   2.6 Rubber gasket or O-ring cord, various diameters, for 'sealing' the sample
   2.7 Acid feed assembly (cut bottles with tubing and needle for the feed), including stand and clamps
   2.8 Pyrex dish to hold block assembly
   2.9 Timer / stopwatch
3. Sample preparation
   3.1 Measure the grammage of the separator, to one decimal point, in g/m² (W).
   3.2 Measurements of diffusion speed will be made at 240g/m²/mm compressed density.
   3.3 Calculate the required thickness for each density value:
      3.3.1 Thickness = grammage ÷ compressed density (240).
   3.4 Determine the shims and o-ring cords required for each thickness calculated:
      3.4.1 Shims should be to the nearest available thickness increment.
      3.4.2 O-ring cord diameter should be equal to, or greater, then the shim thickness, but no more than 0.5mm greater.
   3.5 Cut two samples of separator, 250 x 50mm, in the machine direction.
   3.6 Put the bolts through the Perspex base and lay the assembly on the bench
   3.7 Place dry sample as shown on the Perspex base.
   3.8 Align the o-ring cords tight to the edges of the separator.
   3.9 Put the required shims onto each bolt.
   3.10 Add the Perspex face to the top of this assembly and finger-tighten the nuts.
   3.11 Push the o-ring cords tightly to the sample edge all along the AGM, particularly at the to p.
   3.12 Tighten the nuts using the torque wrench (set at 10Nm). *(refer to* *FIG. 5**.)*
4. Sample testing
   4.1 Put the full block in a dish with a 20mm water level.
   4.2 Add dyed sulfuric acid (SG 1.28g/cm²) into the space at the top of the sample and start the timer (60-minute countdown).
   4.3 Place the needle which is the end of the acid feed line in the space at the top of the sample, ensuring there is sufficient acid in the feed reservoir to complete the test.
   4.4 The acid will travel or diffuse through the pores of the separator and a visual red/pink 'tide mark' will be observed, displaying the magnitude of displacement or diffusion.
   4.5 Check the status of the displacement at regular intervals (about every 1 minute, or less, initially; varies with sample).
   4.6 After the 60 minutes is completed, measure the total acid displacement (distance from the top of the sample to the red/pink mark).
   4.7 Plot a graph with time (seconds) as x-axis and distance traveled (cm) as y-axis. Use curve-fitting (least squares regression analysis) to determine the equation for diffusion distance as a function of time. Using the equation, calculate time in seconds for a distance of 6 cm.
   4.7 Report diffusion speed, at 240g/m²/mm, in terms of average time in seconds for the acid front to reach 6 cm from top of the sample.
5. Results. The diffusion speed of the separators created according to Example 1 were measured following this procedure, and are reported in Table 1, above.

## Claims

1. A battery separator, comprising:
a coarse fiber region;
a first fine fiber region; and
a second fine fiber region;
wherein the coarse fiber region comprises fibers having an average diameter from about 2 to about 50 µm;
wherein each of the first and second fine fiber regions independently comprises glass fibers having an average diameter from about 0.1 to about 2 µm;
provided that the average diameter of the fibers of the coarse fiber region is larger than the average diameter of the fibers of each of the first and second fine fiber regions;
wherein the coarse fiber region is disposed between the first fine fiber region and the second fine fiber region; and
wherein the thickness of the coarse fiber region constitutes 1-30% of the total fiber region thickness.

2. A process for producing a battery separator comprising a coarse fiber region, a first fine fiber region, and a second fine fiber region, wherein the coarse fiber region is disposed between the first fine fiber region and the second fine fiber region, and wherein the thickness of the coarse fiber region constitutes 1-30% of the total fiber region thickness;
the process comprising:
(a) providing a first slurry of glass fibers having an average diameter from about 0.1 to about 2 µm;
(b) laying down the first slurry on a wire of a papermaking machine;
(c) providing a second slurry of fibers having an average diameter from about 2 to about 50 µm; provided that the average diameter of the fibers of the second slurry is larger than the average diameter of the fibers of the first slurry;
(d) laying down the second slurry on top of the first slurry;
(e) providing a third slurry of glass fibers having an average diameter from about 0.1 to about 2 µm; provided that the average diameter of the fibers of the third slurry is smaller than the average diameter of the fibers of the second slurry;
(f) laying down the third slurry on top of the second slurry; and
(g) dewatering the first, second and third slurries to form the separator.

3. A process for producing a battery separator comprising a coarse fiber region, a first fine fiber region, and a second fine fiber region, wherein the coarse fiber region is disposed between the first fine fiber region and the second fine fiber region, and wherein the thickness of the coarse fiber region constitutes 1-30% of the total fiber region thickness;
wherein the process for producing the separator comprises:
(a) providing a first slurry of glass fibers having an average diameter from about 0.1 to about 2 µm;
(b) laying down the first slurry on a wire of a papermaking machine;
(c) providing a second slurry of fibers having an average diameter from about 2 to about 50 µm; provided that the average diameter of the fibers of the second slurry is larger than the average diameter of the fibers of the first slurry;
(d) laying down the second slurry on top of the first slurry;
(e) dewatering the first and second slurries to form a 2-layer structure comprising the first fine fiber region and at least a portion of the coarse fiber region; and
(f) providing a fiber mat comprising glass fibers having an average diameter from about 0.1 to about 2 µm, provided that the average diameter of the fibers of the second slurry is larger than the average diameter of the fibers of the fiber mat; and
(g) laminating the 2-layer structure formed in step (e) to the fiber mat to form a separator.

4. The battery separator according to claim 1, or the process for producing a battery separator according to claim 2 or 3, wherein the coarse fiber region comprises:
(a) glass fibers having an average diameter from about 2 to about 50 µm, or
(b) fibers having an average diameter from about 3 to about 15 µm, or
(c) glass fibers having an average diameter from about 3 to about 15 µm, or
(d) fibers having an average diameter from about 5 to about 10 µm, or
(e) glass fibers having an average diameter from about 5 to about 10 µm.

5. The battery separator according to claim 1 or 4, or the process for producing a battery separator according to any one of claims 2 to 4, wherein each of the first and second fine fiber regions independently comprises glass fibers having an average diameter from:
(a) about 0.4 to about 1.8 µm, or
(b) about 0.6 to about 1.6 µm.

6. The battery separator according to any one of claims 1, 4 or 5, or the process for producing a battery separator according to any one of claims 2 to 5, wherein the thickness of the coarse fiber region constitutes 10-30% of the total fiber region thickness.

7. The battery separator according to any one of claims 1 or 4 to 6, or the process for producing a battery separator according to any one of claims 2 to 6, wherein the thickness of the first fine fiber region ranges from 70% to 130% of the thickness of the second fine fiber region.

8. The battery separator according to any one of claims 1 or 4 to 7, or the process for producing a battery separator according to any one of claims 2 to 7, wherein the compressibility of the separator ranges from:
(a) about 25% to about 40% change in thickness of the separator, or
(b) about 28% to about 35% change in thickness of the separator.

9. The battery separator according to any one of claims 1 or 4 to 8, or the process for producing a battery separator according to any one of claims 2 to 8, wherein the diffusion speed ranges from:
(a) greater than 35 to less than 382 seconds, or
(b) about 125 to about 300 seconds, or
(c) greater than 35 to less than 382 seconds, and the compressibility of the separator ranges from about 25% to about 40% change in thickness of the separator, or
(d) about 100 to about 350 seconds, and the compressibility of the separator ranges from about 28% to about 35% change in thickness of the separator, or
(e) about 125 to about 300 seconds, and the compressibility of the separator ranges from about 28% to about 35% change in thickness of the separator.

10. The battery separator according to any one of claims 1 or 4 to 9, or the process for producing a battery separator according to any one of claims 2 to 9, wherein:
(a) the porosity of the separator ranges from 80% to 98%, or
(b) the basis weight of the separator ranges from about 15 g/m² to about 500 g/m², or
(c) the surface area of the separator ranges from about 0.5 m²/g to about 18 m²/g.

11. The battery separator according to any one of claims 1 or 4 to 10, or the process for producing a battery separator according to any one of claims 2 to 10, wherein:
(a) the tensile strength (machine direction) of the separator ranges from about 175 to about 8800 N/m (about 1 to about 50 lbs/inch), or
(b) the tensile strength (cross direction) of the separator ranges from about about 175 to about 8800 N/m (about 1 to about 50 lbs/inch), or
(c) the mullen burst strength (dry) of the separator ranges from about 175 to about 17500 N/m (about 1 to about 100 lbs/inch), or
(d) the puncture resistance of the separator ranges from about 0.1 to about 3.0 kg.

12. The battery separator according to any one of claims 1 or 4 to 11, or the process for producing a battery separator according to any one of claims 2 to 11, wherein at least one of the coarse fiber region, the first fine fiber region or the second fine fiber region comprises or is part of a non-woven fiber web.

13. A lead-acid battery comprising a negative plate, a positive plate, and a battery separator according to any one of claims 1 or 4 to 12, wherein the battery separator is disposed between the negative and positive plates.

14. The battery separator according to any one of claims 1 or 4 to 11, or the process for producing a battery separator according to any one of claims 2 to 11, wherein the separator comprises a transition zone between the first fine fiber region and the coarse fiber region, wherein the transition zone comprises at least a portion of fibers from the first fine fiber region intermingled with at least a portion of fibers from the second fine fiber region.

## Patentansprüche

1. Batterieseparator, umfassend:
einen Bereich grober Fasern;
einen ersten Bereich feiner Fasern;
einen zweiten Bereich feiner Fasern;
wobei der Bereich grober Fasern Fasern mit einem durchschnittlichen Durchmesser von ungefähr 2 bis ungefähr 50 µm umfasst;
wobei jeder des ersten und zweiten Bereichs feiner Fasern unabhängig Glasfasern mit einem durchschnittlichen Durchmesser von ungefähr 0,1 bis ungefähr 2 µm umfasst;
vorausgesetzt, dass der durchschnittliche Durchmesser der Fasern des Bereichs grober Fasern größer ist als der durchschnittliche Durchmesser der Fasern jedes des ersten und zweiten Bereichs feiner Fasern,
wobei der Bereich grober Fasern zwischen dem ersten Bereich feiner Fasern und dem zweiten Bereich feiner Fasern angeordnet ist; und
wobei die Dicke des Bereichs grober Fasern 1-30% der Gesamtdicke der Faserbereiche ausmacht.

2. Verfahren zur Herstellung eines Batterieseparators umfassend einen Bereich grober Fasern, einen ersten Bereich feiner Fasern und einen zweiten Bereich feiner Fasern, wobei der Bereich grober Fasern zwischen dem ersten Bereich feiner Fasern und dem zweiten Bereich feiner Fasern angeordnet ist, und wobei die Dicke des Bereichs grober Fasern 1-30% der Gesamtdicke der Faserbereiche ausmacht;
das Verfahren umfassend:
(a) das Bereitstellen einer ersten Aufschlämmung von Glasfasern mit einem durchschnittlichen Durchmesser von ungefähr 0,1 bis ungefähr 2 µm;
(b) das Ausbringen der ersten Aufschlämmung auf ein Sieb einer Papiermaschine;
(c) das Bereitstellen einer zweiten Aufschlämmung von Fasern mit einem durchschnittlichen Durchmesser von ungefähr 2 bis ungefähr 50 µm;
vorausgesetzt, dass der durchschnittliche Durchmesser der Fasern der zweiten Aufschlämmung größer ist als der durchschnittliche Durchmesser der Fasern der ersten Aufschlämmung;
(d) das Ausbringen der zweiten Aufschlämmung oben auf die erste Aufschlämmung;
(e) das Bereitstellen einer dritten Aufschlämmung von Glasfasern mit einem durchschnittlichen Durchmesser von ungefähr 0,1 bis ungefähr 2 µm;
vorausgesetzt, dass der durchschnittliche Durchmesser der Fasern der dritten Aufschlämmung kleiner ist als der durchschnittliche Durchmesser der Fasern der zweiten Aufschlämmung;
(f) das Ausbringen der dritten Aufschlämmung oben auf die zweite Aufschlämmung; und
(g) das Entwässern der ersten, zweiten und dritten Aufschlämmungen, um den Separator zu bilden.

3. Verfahren zur Herstellung eines Batterieseparators umfassend einen Bereich grober Fasern, einen ersten Bereich feiner Fasern und einen zweiten Bereich feiner Fasern, wobei der Bereich grober Fasern zwischen dem ersten Bereich feiner Fasern und dem zweiten Bereich feiner Fasern angeordnet ist, und wobei die Dicke des Bereichs grober Fasern 1-30% der Gesamtdicke der Faserbereiche ausmacht;
wobei das Verfahren zur Herstellung des Separators umfasst:
(a) das Bereitstellen einer ersten Aufschlämmung von Glasfasern mit einem durchschnittlichen Durchmesser von ungefähr 0,1 bis ungefähr 2 µm;
(b) das Ausbringen der ersten Aufschlämmung auf ein Sieb einer Papiermaschine;
(c) das Bereitstellen einer zweiten Aufschlämmung von Fasern mit einem durchschnittlichen Durchmesser von ungefähr 2 bis ungefähr 50 µm;
vorausgesetzt, dass der durchschnittliche Durchmesser der Fasern der zweiten Aufschlämmung größer ist als der durchschnittliche Durchmesser der Fasern der ersten Aufschlämmung;
(d) das Ausbringen der zweiten Aufschlämmung oben auf die erste Aufschlämmung;
(e) das Entwässern der ersten und zweiten Aufschlämmungen, um eine 2-Schichtstruktur zu bilden, die den ersten Bereich feiner Fasern und mindestens einen Teil des Bereichs grober Fasern umfasst; und
(f) das Bereitstellen einer Fasermatte umfassend Glasfasern mit einem durchschnittlichen Durchmesser von ungefähr 0,1 bis ungefähr 2 µm; vorausgesetzt, dass der durchschnittliche Durchmesser der Fasern der zweiten Aufschlämmung größer ist als der durchschnittliche Durchmesser der Fasern der Fasermatte; und
(g) das Laminieren der im Schritt (e) gebildeten 2-Schichtstruktur auf die Fasermatte um einen Separator zu bilden.

4. Batterieseparator gemäß Anspruch 1, oder Verfahren zur Herstellung eines Batterieseparators gemäß Anspruch 2 oder 3, wobei der Bereich grober Fasern umfasst:
(a) Glasfasern mit einem durchschnittlichen Durchmesser von ungefähr 2 bis ungefähr 50 µm, oder
(b) Fasern mit einem durchschnittlichen Durchmesser von ungefähr 3 bis ungefähr 15 µm, oder
(c) Glasfasern mit einem durchschnittlichen Durchmesser von ungefähr 3 bis ungefähr 15 µm, oder
(d) Fasern mit einem durchschnittlichen Durchmesser von ungefähr 5 bis ungefähr 10 µm, oder
(e) Glasfasern mit einem durchschnittlichen Durchmesser von ungefähr 5 bis ungefähr 10 µm.

5. Batterieseparator gemäß Anspruch 1 oder 4, oder Verfahren zur Herstellung eines Batterieseparators gemäß einem der Ansprüche 2 bis 4, wobei jeder des ersten und zweiten Bereichs feiner Fasern unabhängig Glasfasern umfasst mit einem durchschnittlichen Durchmesser von:
(a) ungefähr 0,4 bis ungefähr 1,8 µm, oder
(b) ungefähr 0,6 bis ungefähr 1,6 µm.

6. Batterieseparator gemäß einem der Ansprüche 1, 4 oder 5, oder Verfahren zur Herstellung eines Batterieseparators gemäß einem der Ansprüche 2 bis 5, wobei die Dicke des Bereichs grober Fasern 10-30% der Gesamtdicke der Faserbereiche ausmacht.

7. Batterieseparator gemäß einem der Ansprüche 1 oder 4 bis 6, oder Verfahren zur Herstellung eines Batterieseparators gemäß einem der Ansprüche 2 bis 6, wobei die Dicke des ersten Bereichs feiner Fasern 70% bis 130% der Dicke des zweiten Bereichs feiner Fasern beträgt.

8. Batterieseparator gemäß einem der Ansprüche 1 oder 4 bis 7, oder Verfahren zur Herstellung eines Batterieseparators gemäß einem der Ansprüche 2 bis 7, wobei die Kompressibilität des Separators in einem Bereich liegt von:
(a) ungefähr 25% bis ungefähr 40% Änderung der Dicke des Separators, oder
(b) ungefähr 28% bis ungefähr 35% Änderung der Dicke des Separators.

9. Batterieseparator gemäß einem der Ansprüche 1 oder 4 bis 8, oder Verfahren zur Herstellung eines Batterieseparators gemäß einem der Ansprüche 2 bis 8, wobei die Diffusionsgeschwindigkeit in einem Bereich liegt von:
(a) mehr als 35 und weniger als 382 Sekunden, oder
(b) ungefähr 125 bis ungefähr 300 Sekunden, oder
(c) mehr als 35 bis weniger als 382 Sekunden, und die Kompressibilität des Separators in einem Bereich von ungefähr 25% bis ungefähr 40% Änderung der Dicke des Separators liegt, oder
(d) ungefähr 100 bis ungefähr 350 Sekunden, und die Kompressibilität des Separators in einem Bereich von ungefähr 28% bis ungefähr 35% Änderung der Dicke des Separators liegt, oder
(e) ungefähr 125 bis ungefähr 300 Sekunden, und die Kompressibilität des Separators in einem Bereich von ungefähr 28% bis ungefähr 35% Änderung der Dicke des Separators liegt.

10. Batterieseparator gemäß einem der Ansprüche 1 oder 4 bis 9, oder Verfahren zur Herstellung eines Batterieseparators gemäß einem der Ansprüche 2 bis 9, wobei:
(a) die Porosität des Separators in einem Bereich von 80% bis 98% liegt, oder
(b) das Flächengewicht des Separators in einem Bereich von ungefähr 15 g/m² bis ungefähr 500 g/m² liegt, oder
(c) die Oberfläche des Separators in einem Bereich von ungefähr 0,5 m²/g bis ungefähr 18 m²/g liegt.

11. Batterieseparator gemäß einem der Ansprüche 1 oder 4 bis 10, oder Verfahren zur Herstellung eines Batterieseparators gemäß einem der Ansprüche 2 bis 10, wobei:
(a) die Zugfestigkeit (Maschinenrichtung) des Separators in einem Bereich von ungefähr 175 bis ungefähr 8800 N/m (ungefähr 1 bis 50 Pfund/Zoll (lbs/inch)) liegt, oder
(b) die Zugfestigkeit (Querrichtung) des Separators in einem Bereich von ungefähr 175 bis ungefähr 8800 N/m (ungefähr 1 bis 50 Pfund/Zoll (lbs/inch)) liegt, oder
(c) die Berstfestigkeit nach Mullen (trocken) des Separators in einem Bereich von ungefähr 175 bis ungefähr 17500 N/m (ungefähr 1 bis 100 Pfund/Zoll (lbs/inch)) liegt, oder
(d) die Durchstoßfestigkeit des Separators in einem Bereich von ungefähr 0,1 bis ungefähr 3,0 kg liegt.

12. Batterieseparator gemäß einem der Ansprüche 1 oder 4 bis 11, oder Verfahren zur Herstellung eines Batterieseparators gemäß einem der Ansprüche 2 bis 11, wobei mindestens einer des Bereichs grober Fasern, des ersten Bereichs feiner Fasern oder des zweiten Bereichs feiner Fasern eine Faservliesbahn umfasst oder Teil davon ist.

13. Bleisäurebatterie umfassend eine negative Platte, eine positive Platte und einen Batterieseparator gemäß einem der Ansprüche 1 oder 4 bis 12, wobei der Batterieseparator zwischen den negativen und positiven Platten angebracht ist.

14. Batterieseparator gemäß einem der Ansprüche 1 oder 4 bis 11, oder Verfahren zur Herstellung eines Batterieseparators gemäß einem der Ansprüche 2 bis 11, wobei der Separator zwischen dem ersten Bereich feiner Fasern und dem Bereich grober Fasern eine Übergangszone umfasst, wobei die Überganszone mindestens einen Teil der Fasern des ersten Bereichs feiner Fasern vermischt mit mindestens einem Teil der Fasern des zweiten Bereichs feiner Fasern umfasst.

## Revendications

1. Séparateur de batterie, comprenant :
une région de fibres grossières ;
une première région de fibres fines ; et
une seconde région de fibres fines ;
dans lequel la région de fibres grossières comprend des fibres présentant un diamètre moyen d'environ 2 à environ 50 µm ;
dans lequel chacune des première et seconde régions de fibres fines comprend indépendamment des fibres de verre présentant un diamètre moyen d'environ 0,1 à environ 2 µm ;
à condition que le diamètre moyen des fibres de la région de fibres grossières soit plus grand que le diamètre moyen des fibres de chacune des première et seconde régions de fibres fines ;
dans lequel la région de fibres grossières est disposée entre la première région de fibres fines et la seconde région de fibres fines ; et
dans lequel l'épaisseur de la région de fibres grossières constitue 1 à 30 % de l'épaisseur de région de fibres totale.

2. Procédé de production d'un séparateur de batterie comprenant une région de fibres grossières, une première région de fibres fines et une seconde région de fibres fines, dans lequel la région de fibres grossières est disposée entre la première région de fibres fines et la seconde région de fibres fines, et dans lequel l'épaisseur de la région de fibres grossières constitue 1 à 30 % de l'épaisseur de région de fibres totale ;
le procédé comprenant les étapes consistant à :
(a) fournir une première bouillie de fibres de verre présentant un diamètre moyen d'environ 0,1 à environ 2 µm ;
(b) déposer la première bouillie sur un fil d'une machine de fabrication de papier ;
(c) fournir une deuxième bouillie de fibres présentant un diamètre moyen d'environ 2 à environ 50 µm ; à condition que le diamètre moyen des fibres de la deuxième bouillie soit plus grand que diamètre moyen des fibres de la première bouillie ;
(d) déposer la deuxième bouillie sur un dessus de la première bouillie ;
(e) fournir une troisième bouillie de fibres présentant un diamètre moyen d'environ 0,1 à environ 2 µm ; à condition que le diamètre moyen des fibres de la troisième bouillie soit plus grand que diamètre moyen des fibres de la deuxième bouillie ;
(f) déposer la troisième bouillie sur un dessus de la deuxième bouillie ; et
(g) déshydrater les première, deuxième et troisième bouillies pour former le séparateur.

3. Procédé de production d'un séparateur de batterie comprenant une région de fibres grossières, une première région de fibres fines et une seconde région de fibres fines, dans lequel la région de fibres grossières est disposée entre la première région de fibres fines et la seconde région de fibres fines, et dans lequel l'épaisseur de la région de fibres grossières constitue 1 à 30 % de l'épaisseur de région de fibres totale ;
dans lequel le procédé de production du séparateur comprend les étapes consistant à :
(a) fournir une première bouillie de fibres de verre présentant un diamètre moyen d'environ 0,1 à environ 2 µm ;
(b) déposer la première bouillie sur un fil d'une machine de fabrication de papier ;
(c) fournir une seconde bouillie de fibres présentant un diamètre moyen d'environ 2 à environ 50 µm ; à condition que le diamètre moyen des fibres de la seconde bouillie soit plus grand que diamètre moyen des fibres de la première bouillie ;
(d) déposer la seconde bouillie sur un dessus de la première bouillie ;
(e) déshydrater les première et seconde bouillies pour former une structure à deux couches comprenant la première région de fibres fines et au moins une partie de la région de fibres grossières ; et
(f) fournir un mat de fibres présentant un diamètre moyen d'environ 0,1 à environ 2 µm ; à condition que le diamètre moyen des fibres de la seconde bouillie soit plus grand que diamètre moyen des fibres de la première bouillie ; et
(g) stratifier la structure à deux couches formée à l'étape (e) sur le mat de fibres pour former un séparateur.

4. Séparateur de batterie selon la revendication 1, ou processus de production d'un séparateur de batterie selon la revendication 2 ou 3, dans lequel la région de fibres grossières comprend :
(a) des fibres de verre présentant un diamètre moyen d'environ 2 à environ 50 µm, ou
(b) des fibres présentant un diamètre moyen d'environ 3 à environ 15 µm, ou
(c) des fibres de verre présentant un diamètre moyen d'environ 3 à environ 15 µm, ou
(d) des fibres présentant un diamètre moyen d'environ 5 à environ 10 µm, ou
(e) des fibres de verre présentant un diamètre moyen d'environ 5 à environ 10 µm.

5. Séparateur de batterie selon la revendication 1 ou 4, ou processus de production d'un séparateur de batterie selon l'une quelconque des revendications 2 à 4, dans lequel chacune des première et seconde régions de fibres fines comprend indépendamment des fibres de verre présentant un diamètre moyen de :
(a) environ 0,4 à environ 1,8 µm, ou
(b) environ 0,6 à environ 1,6 µm.

6. Séparateur de batterie selon l'une quelconque des revendications 1, 4 ou 5, ou processus de production d'un séparateur de batterie selon l'une quelconque des revendications 2 à 5, dans lequel l'épaisseur de la région de fibres grossières constitue 10 à 30 % de l'épaisseur de région de fibres totale.

7. Séparateur de batterie selon l'une quelconque des revendications 1 ou 4 à 6, ou processus de production d'un séparateur de batterie selon l'une quelconque des revendications 2 à 6, dans lequel l'épaisseur de la région de fibres grossières constitue 70 % à 130 % de l'épaisseur de région de fibres totale.

8. Séparateur de batterie selon l'une quelconque des revendications 1 ou 4 à 7, ou processus de production d'un séparateur de batterie selon l'une quelconque des revendications 2 à 7, dans lequel la compressibilité du séparateur est dans la plage de :
(a) environ 25 % à environ 40 % de changement de l'épaisseur du séparateur, ou
(b) environ 28 % à environ 35 % de changement de l'épaisseur du séparateur.

9. Séparateur de batterie selon l'une quelconque des revendications 1 ou 4 à 8, ou processus de production d'un séparateur de batterie selon l'une quelconque des revendications 2 à 8, dans lequel la vitesse de diffusion est dans la plage de :
(a) environ 35 à environ 382 µm, ou
(b) environ 125 à environ 300 µm, ou
(c) plus de 35 à moins de 382 secondes, et la compressibilité du séparateur est dans la plage d'environ 25 % à environ 40 % de changement de l'épaisseur du séparateur, ou
(d) environ 100 à environ 350 secondes, et la compressibilité du séparateur est dans la plage d'environ 28 % à environ 35 % de changement de l'épaisseur du séparateur, ou
(e) environ 125 à environ 300 secondes, et la compressibilité du séparateur est dans la plage d'environ 28 % à environ 35 % de changement de l'épaisseur du séparateur.

10. Séparateur de batterie selon l'une quelconque des revendications 1 ou 4 à 9, ou processus de production d'un séparateur de batterie selon l'une quelconque des revendications 2 à 9, dans lequel :
(a) la porosité du séparateur est dans la plage de 80 % à 98 %, ou
(b) le grammage du séparateur est dans la plage d'environ 15 g/m² à environ 500 g/m², ou
(c) la superficie du séparateur est dans la plage d'environ 0,5 m²/g à environ 18 m²/g.

11. Séparateur de batterie selon l'une quelconque des revendications 1 ou 4 à 10, ou processus de production d'un séparateur de batterie selon l'une quelconque des revendications 2 à 10, dans lequel :
(a) la résistance à la traction (sens machine) du séparateur est dans la plage d'environ 175 à environ 8 800 N/m (environ 1 à environ 50 livres/pouce), ou
(b) la résistance à la traction (sens transversal) du séparateur est dans la plage d'environ 175 à environ 8 800 N/m (environ 1 à environ 50 livres/pouce), ou
(c) la résistance à l'éclatement de mullen (à sec) du séparateur est dans la plage d'environ 175 à environ 17 500 N/m (environ 1 à environ 100 livres/pouce), ou
(d) la résistance à la perforation du séparateur est dans la plage d'environ 0,1 à environ 3,0 kg.

12. Séparateur de batterie selon l'une quelconque des revendications 1 ou 4 à 11, ou processus de production d'un séparateur de batterie selon l'une quelconque des revendications 2 à 11, dans lequel au moins l'une parmi la région de fibres grossières, la première région de fibres fines ou la seconde région de fibres fines comprend ou fait partie d'un tissu fibreux non tissé.

13. Batterie plomb-acide comprenant une plaque négative, une plaque positive et un séparateur de batterie selon l'une quelconque des revendications 1 ou 4 à 12, dans laquelle le séparateur de batterie est disposé entre les plaques négative et positive.

14. Séparateur de batterie selon l'une quelconque des revendications 1 ou 4 à 11, ou processus de production d'un séparateur de batterie selon l'une quelconque des revendications 2 à 11, dans lequel le séparateur comprend une zone de transition entre la première région de fibres fines et la région de fibres grossières,
dans lequel la zone de transition comprend au moins une partie de fibres de la première région de fibres fines entremêlée avec au moins une partie de fibres de la seconde région de fibres fines.
